(19) **Europäisches Patentamt**
**European Patent Office**
**Office européen des brevets**

(11) **EP 4 206 611 A1**

(12) **EUROPEAN PATENT APPLICATION**
published in accordance with Art. 153(4) EPC

(43) Date of publication:
**05.07.2023 Bulletin 2023/27**

(21) Application number: **21874405.0**

(22) Date of filing: **26.09.2021**

(51) International Patent Classification (IPC):
***G01C 21/32*** (2006.01)

(52) Cooperative Patent Classification (CPC):
**G01C 21/32; G06F 16/29; G06F 16/951;**
**G06F 16/9537; G06F 18/00**

(86) International application number:
**PCT/CN2021/120792**

(87) International publication number:
**WO 2022/068745 (07.04.2022 Gazette 2022/14)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **30.09.2020 CN 202011066444**

(71) Applicant: **Huawei Technologies Co., Ltd.**
**Shenzhen, Guangdong 518129 (CN)**

(72) Inventors:
• **WANG, Hao**
**Shenzhen, Guangdong 518129 (CN)**
• **HUANG, Qian**
**Shenzhen, Guangdong 518129 (CN)**
• **LI, Jun**
**Beijing 100083 (CN)**
• **LIU, Juqing**
**Beijing 100083 (CN)**

(74) Representative: **Pfenning, Meinig & Partner mbB**
**Patent- und Rechtsanwälte**
**Theresienhöhe 11a**
**80339 München (DE)**

(54) **DATA PROCESSING METHOD AND DEVICE**

(57) A data processing method and device are provided. The method includes: performing encoding based on spatial position data and time position data of a trajectory point of a trajectory according to an encoding rule of a hybrid code of a preset level in an index database, to obtain a hybrid code of each trajectory point, where the hybrid code includes temporal information and spatial position information of the trajectory point; and then querying a similar trajectory of a trajectory in the index database based on the hybrid code of each trajectory point. The index database includes hybrid codes of a plurality of levels, and the index database includes hybrid codes with trajectory information, where the trajectory information includes a trajectory identifier and a trajectory length. Trajectory query accuracy can be improved, trajectory similarity calculation complexity can be reduced, and efficiency of querying a similar trajectory can be improved.

S1301: A server obtains first information, where the first information includes spatial position data and temporal data of one or more trajectory points of a first trajectory

S1302: The server obtains a first hybrid code set based on the first information, where the first hybrid code set is used to query a trajectory similar to the first trajectory in an index database

S1303: The server searches, based on the first hybrid code set, the index database for trajectory information of m candidate similar trajectories similar to the first trajectory, where m is an integer

S1304: The server calculates a similarity between the first trajectory and the m candidate similar trajectories based on a trajectory length of the first trajectory and the trajectory information of the m candidate similar trajectories

S1305: The server screens trajectory data of N similar trajectories, where N is an integer greater than or equal to m

FIG. 13

EP 4 206 611 A1

## Description

This application claims priority to Chinese Patent Application No. 202011066444.7, filed with the China National Intellectual Property Administration on September 30, 2020 and entitled "DATA PROCESSING METHOD AND DEVICE", which is incorporated herein by reference in its entirety.

## TECHNICAL FIELD

The present invention relates to the field of data processing technologies, and in particular, to a data processing method and device.

## BACKGROUND

With rapid development of mobile Internet technologies, a large amount of trajectory data that reflects position information and behavior statuses of individuals and groups has been generated. The trajectory data includes rich temporal and spatial position information and semantic information and is widely used in various fields such as intelligent transportation, urban computing, and social perception. As one of foundations of trajectory data mining, trajectory similarity query gradually becomes a research hotspot at home and abroad, and has attracted wide attention from all walks of life and is widely applied, such as commuting pattern recognition, traffic condition prediction, abnormal behavior detection, criminal behavior tracking, and major epidemic prevention and control, which are of great significance to urban transportation, urban planning, and public health.

However, in an existing trajectory similarity query solution, either temporal information of a trajectory is missing, or similarity calculation complexity is high. Therefore, how to add the temporal information of the trajectory in the trajectory similarity query to improve accuracy of the trajectory query and reduce the complexity of the trajectory similarity calculation is a technical problem urgently to be resolved by a person skilled in the art.

## SUMMARY

This application provides a data processing method and device, to improve trajectory query accuracy, reduce trajectory similarity calculation complexity, and improve efficiency of querying a similar trajectory.

According to a first aspect, this application provides a data processing method, including:

obtaining first information, where the first information includes spatial position data and temporal data of one or more trajectory points of a first trajectory;

obtaining a first hybrid code set based on the first information, where the first hybrid code set includes a hybrid code of each trajectory point of the first information, and the hybrid code is obtained through encoding according to an encoding rule of a hybrid code of a preset level in an index database; the hybrid code includes a temporal code of a trajectory point and a spatial code of the trajectory point, the temporal code is obtained based on the temporal data, and the spatial code is obtained based on the spatial position data; and the index database has a multi-level index structure and includes hybrid codes of a plurality of levels, hybrid codes of each level are divided into sets based on hybrid codes of a level to which the hybrid codes of each level belong, there is an indexing relationship between the hybrid codes of each level and the hybrid codes of the level to which the hybrid codes of each level belong, the hybrid codes of the plurality of levels include hybrid codes with trajectory information, the trajectory information is used to indicate a trajectory identifier of a trajectory to which the hybrid code belongs and a trajectory length of the trajectory to which the hybrid code belongs, and a trajectory length of a trajectory is a quantity of hybrid codes whose trajectory identifiers stored in the index database indicate a same trajectory;

querying the index database based on each hybrid code in the first hybrid code set according to a query method of a multi-level index structure, to obtain a second hybrid code set, where a hybrid code in the second hybrid code set is a hybrid code with trajectory information; and the hybrid code in the second hybrid code set is mapped to trajectory information of m candidate similar trajectories, where m is an integer; and

obtaining N similar trajectories based on a trajectory length of the first trajectory and the trajectory information of the m candidate similar trajectories, where N is an integer less than or equal to m.

In this application, the hybrid code is obtained by encoding temporal information and spatial information of the trajectory point of the trajectory, the multi-level index database is constructed based on the hybrid code, and the trajectory information is mapped to the hybrid code in the index database. Based on this, candidate similar trajectories are found in the index database, and a similar trajectory of a target trajectory is calculated based on the candidate similar trajectories. Therefore, trajectory query accuracy can be improved, trajectory similarity calculation complexity can be reduced, and efficiency of querying a similar trajectory can be improved.

In a possible implementation, the querying the index database based on each hybrid code in the first hybrid code set according to a query method of a multi-level index structure, to obtain a second hybrid code set includes: comparing each hybrid code in the first hybrid code set with a hybrid code in the index database according to the query method of the multi-level index structure, to obtain the second hybrid code set, where the hybrid code in the second hybrid code set is a hybrid code that is in the index database and that is the same as a hybrid code in the first hybrid code set, and/or a lower-level hybrid code and/or a higher-level hybrid code that correspond/corresponds to a hybrid code that is in the index database and that is the same as a hybrid code in the first hybrid code set.

This application describes a process of querying a code set corresponding to candidate similar trajectories, so that the candidate similar trajectories can be obtained, the candidate similar trajectories are screened, and then a similarity between the trajectories is calculated. Therefore, a quantity of times of similarity calculation can be reduced, and calculation efficiency can be improved.

In a possible implementation, the first information further includes attribute data of the first trajectory, the trajectory information further includes attribute information of a trajectory indicated by the trajectory information, and the attribute information is obtained based on attribute data of the trajectory indicated by the trajectory information; and

> the querying the index database based on each hybrid code in the first hybrid code set according to a query method of a multi-level index structure, to obtain a second hybrid code set includes:
> comparing each hybrid code in the first hybrid code set with a hybrid code in the index database according to the query method of the multi-level index structure, to obtain a first matching hybrid code, where the first matching hybrid code is a hybrid code that is in the index database and that is the same as a hybrid code in the first hybrid code set, and/or a lower-level hybrid code and/or a higher-level hybrid code that correspond/corresponds to a hybrid code that is in the index database and that is the same as a hybrid code in the first hybrid code set; and
> obtaining the second hybrid code set based on the first matching hybrid code, where the hybrid code in the second hybrid code set is a hybrid code that is in the first matching hybrid codes and whose attribute information includes the attribute information of the first trajectory.

In this application, in addition to the foregoing hybrid code used as an index, the attribute information is further added as filtering information. The attribute information may further filter out an unnecessary trajectory when a similar trajectory is queried, so that a matching similar trajectory can be found more efficiently and more accurately.

In a possible implementation, the comparing each hybrid code in the first hybrid code set with a hybrid code in the index database according to the query method of the multi-level index structure includes:

> determining a hybrid code of a target level based on a first hybrid code in the first hybrid code set, where the target level is a level to which the preset level belongs;
> performing query based on the hybrid code of the target level, to obtain a first candidate hybrid code set; and
> comparing the first hybrid code with the first candidate hybrid code set.

In this application, a lower-level hybrid code is first obtained as an index, so that indexing efficiency can be improved.

In a possible implementation, the obtaining a first hybrid code set based on the first information includes:

> encoding the spatial position data of the one or more trajectory points according to an encoding rule of a spatial code in the hybrid code of the preset level, to obtain a spatial code of each of the one or more trajectory points;
> encoding the temporal data of the one or more trajectory points according to an encoding rule of a temporal code in the hybrid code of the preset level, to obtain a temporal code of each of the one or more trajectory points; and
> combining the spatial code and the temporal code of each of the one or more trajectory points to obtain the hybrid code of each trajectory point.

This application describes an encoding process of the hybrid code. The hybrid code is a combination of the temporal code and the spatial code of the trajectory point. Therefore, compared with the conventional technology in which only the spatial code is used to represent the trajectory point, this application uses the hybrid code to represent the trajectory point more accurately.

In a possible implementation, the first information further includes attribute data of the first trajectory, and the obtaining a first hybrid code set based on the first information includes:

> encoding the spatial position data of the one or more trajectory points according to an encoding rule of a spatial code in the hybrid code of the preset level, to obtain a spatial code of each of the one or more trajectory points;

encoding the temporal data of the one or more trajectory points according to an encoding rule of a temporal code in the hybrid code of the preset level, to obtain a temporal code of each of the one or more trajectory points; encoding the attribute data of the first trajectory to obtain an attribute code of the first trajectory; and combining the spatial code and the temporal code of each of the one or more trajectory points and the attribute code to obtain the hybrid code of each trajectory point.

In this application, in addition to the temporal information and the spatial information of the trajectory point, the hybrid code may further include attribute information of a trajectory corresponding to the trajectory point. The attribute information may further filter out an unnecessary trajectory when a similar trajectory is queried, so that a matching similar trajectory can be found more efficiently and more accurately.

In a possible implementation, the obtaining N similar trajectories based on a trajectory length of the first trajectory and the trajectory information of the m candidate similar trajectories includes:

calculating a quantity of ith codes, where the quantity of the ith codes is calculated based on a quantity of hybrid codes to which an ith identifier is mapped in the second hybrid code set, the ith identifier is a trajectory identifier of an ith candidate similar trajectory, and a value of i ranges from 1 to m;

obtaining an ith length, where the ith length is obtained through calculation based on the trajectory length of the first trajectory, or based on a trajectory length of the ith candidate similar trajectory and the trajectory length of the first trajectory;

calculating a ratio of the quantity of the ith codes to the ith length, where the ratio is a similarity between the ith candidate similar trajectory and the first trajectory; and

screening the N similar trajectories based on m similarities obtained through the calculation.

In this application, the trajectory similarity may be directly calculated based on the hybrid code in the index database and the trajectory information mapped to the hybrid code. Compared with the conventional technology in which the trajectory similarity is calculated by using a longitude vector and a latitude vector, this application improves calculation efficiency. In addition, the similarity calculation does not require use of raw data of a trajectory, that is, the spatial position data and the temporal data of the trajectory points included in the trajectory, and therefore there is no need to perform a large quantity of disk reading operations to access the raw data of the trajectory, thereby reducing a disk performance loss caused by disk reading, and further improving efficiency of querying a similar trajectory.

In a possible implementation, in a first preset scenario, the quantity of the ith codes is a quantity of trajectory identifiers of the ith candidate similar trajectory mapped to a hybrid code in the first hybrid code set, the ith length is a difference between a sum of lengths and the quantity of the ith codes, the sum of the lengths is a sum of a first length and the trajectory length of the first trajectory, the first length is a product of the trajectory length of the ith candidate similar trajectory and a coefficient K, and K is greater than 0.

In a second preset scenario, the quantity of the ith codes is twice a quantity of trajectory identifiers of the ith candidate similar trajectory mapped to a hybrid code in the first hybrid code set, the ith length is a sum of a second length and the trajectory length of the first trajectory, and the second length is a product of the trajectory length of the ith candidate similar trajectory and the coefficient K.

In a third preset scenario, the quantity of the ith codes is a quantity of trajectory identifiers of the ith candidate similar trajectory mapped to a hybrid code in the first hybrid code set, and the ith length is the trajectory length of the first trajectory.

If the first matching hybrid code includes a hybrid code that is in the index database and that is the same as a hybrid code in the first hybrid code set, K is equal to 1.

If the first matching hybrid code includes a lower-level hybrid code corresponding to the hybrid code that is in the index database and that is the same as a hybrid code in the first hybrid code set, K is greater than 1.

If the first matching hybrid code includes a higher-level hybrid code corresponding to the hybrid code that is in the index database and that is the same as a hybrid code in the first hybrid code set, K is greater than 0 and less than 1.

In this application, different trajectory similarity calculation manners are used in different scenarios, so that a matching similarity can be found more accurately, and precision of a found similar trajectory can also be improved.

In a possible implementation, the first hybrid code set further includes hybrid codes of trajectory interpolation points, and the trajectory interpolation points are obtained based on the one or more trajectory points according to a preset interpolation method.

In this application, hybrid codes of more trajectory points are obtained in an interpolation manner based on an existing trajectory point, so that a relationship between the trajectory points is closer, and a matching similar trajectory is better found in the process of querying a similar trajectory.

In a possible implementation, the index database is a database constructed based on a spatial-temporal grid model, the spatial-temporal grid model includes a plurality of levels of spatial-temporal grids, each spatial-temporal grid level is determined based on a spatial level and a temporal division granularity that are set, and each spatial-temporal grid is mapped to a hybrid code; and the plurality of levels of the index database are r levels, r is greater than 1, and the r levels of the index database respectively correspond to r spatial-temporal grid levels.

In this application, the hybrid code of an existing trajectory point is extended, so that an adjacent hybrid code is also a hybrid code of the trajectory, thereby avoiding omission of a potential similar trajectory, and ensuring robustness of a trajectory similarity query algorithm.

In a possible implementation, the index database is a database constructed based on a spatial-temporal grid model, the spatial-temporal grid model includes a plurality of levels of spatial-temporal grids, each spatial-temporal grid level is determined based on a spatial level and a temporal division granularity that are set, and each spatial-temporal grid is mapped to a hybrid code; and the plurality of levels of the index database are r levels, r is greater than 1, hybrid codes of the r levels of the index database are hybrid codes mapped to the spatial-temporal grids of the r spatial-temporal grid levels, the r levels of the index database are one-to-one mapped to the r spatial-temporal grid levels, and the r spatial-temporal grid levels are r levels in preset levels of the spatial-temporal grid model.

The index database constructed in this application is a multi-level and multi-dimensional database. "Multi-dimensional" means that an indexed hybrid code in the index database includes temporal information and spatial information of a trajectory, and optionally, may further include attribute information of the trajectory. Therefore, the indexing is multi-dimensional indexing. "Multi-level" means that the index database includes index codes of a plurality of levels, each level further has a mapping relationship with a level of the spatial-temporal grid model, and the index database constructed based on the spatial-temporal grid model also has an attribute of the spatial-temporal grid model. For example, a spatial code part of the hybrid code includes a higher-level spatial code prefix including an attribute of a corresponding lower-level spatial code, and a temporal code part of the hybrid code includes a higher-level temporal code prefix including an attribute of a corresponding lower-level temporal code. With these attributes, a similar trajectory can be efficiently found in the process of querying a similar trajectory.

In a possible implementation, the index database is mapped to a trajectory database, the trajectory database is used to store raw data of a plurality of trajectories included in the index database, the raw data includes a plurality of pieces of data in temporal data, spatial position data, and attribute data of the plurality of trajectories, and identifiers of the plurality of trajectories included in the index database are in a one-to-one correspondence with the raw data of the plurality of trajectories in the trajectory database.

In this application, the trajectory database is further correspondingly constructed, so that the raw data of the trajectory can be found when the raw data of the trajectory needs to be queried.

According to a second aspect, this application provides a method for constructing a trajectory expression model, where the method includes:

obtaining trajectory data of a second trajectory, where the trajectory data includes spatial position data and temporal data of one or more trajectory points of the second trajectory; and
performing encoding, based on the trajectory data code, to obtain a third hybrid code set expressing the second trajectory, where the third hybrid code set includes a hybrid code of each of one or more trajectory points of the second trajectory, and the hybrid code is obtained through encoding according to an encoding rule of a hybrid code of a preset level in an index database; the foregoing hybrid code includes a temporal code of the trajectory point and a spatial code of the trajectory point, the foregoing temporal code is obtained based on the foregoing temporal data, and the foregoing spatial code is obtained based on the foregoing spatial position data; and the index database includes hybrid codes of r levels, r is greater than 1, the hybrid codes of r levels are hybrid codes mapped to spatial-temporal grids in the r spatial-temporal grid levels, the r levels are one-to-one mapped to the r spatial-temporal grid levels, the r spatial-temporal grid levels are r levels in a plurality of levels included in the preset spatial-temporal grid model, and each spatial-temporal grid level in the foregoing spatial-temporal grid model is determined based on a spatial level and a temporal division granularity that are set.

In this application, a trajectory is expressed by using a hybrid code set combining temporal information and spatial information of the trajectory. Such a trajectory expression model can be used to quickly and accurately find a matching similar trajectory in similar trajectory query with reference to the foregoing index database.

In a possible implementation, the performing encoding, based on the trajectory data code, to obtain a third hybrid code set expressing the second trajectory includes:

encoding the spatial position data of the one or more trajectory points according to an encoding rule of a spatial code in a hybrid code of the preset level, to obtain a spatial code of each of the one or more trajectory points;
encoding the temporal data of the one or more trajectory points according to an encoding rule of a temporal code in the hybrid code of the preset level, to obtain a temporal code of each of the one or more trajectory points; and
combining the spatial code and the temporal code of each of the one or more trajectory points to obtain the hybrid code of each trajectory point, where the hybrid codes of the one or more trajectory points form the third hybrid code set.

This application describes an encoding process of a hybrid code. The hybrid code is a combination of a temporal code and a spatial code of a trajectory point. Therefore, compared with a conventional technology in which only a spatial code is used to represent a trajectory point, this application uses a hybrid code to represent a trajectory point more accurately.

In a possible implementation, the trajectory data further includes attribute data of the second trajectory, and the performing encoding, based on the trajectory data code, to obtain a third hybrid code set expressing the second trajectory includes:

encoding the spatial position data of the one or more trajectory points according to an encoding rule of a spatial code in a hybrid code of the preset level, to obtain a spatial code of each of the one or more trajectory points;
encoding the temporal data of the one or more trajectory points according to an encoding rule of a temporal code in the hybrid code of the preset level, to obtain a temporal code of each of the one or more trajectory points;
encoding the attribute data of the second trajectory to obtain the attribute code of the second trajectory; and
combining the spatial code and the temporal code of each of the one or more trajectory points and the attribute code to obtain the hybrid code of each trajectory point, where the hybrid codes of the one or more trajectory points form the third hybrid code set.

In this application, in addition to the temporal information and the spatial information of a trajectory point, a hybrid code may further include attribute information of a trajectory corresponding to the trajectory point. The attribute information may further filter out unnecessary trajectories when a similar trajectory is queried, so that a matching similar trajectory can be found more efficiently and more accurately.

In a possible implementation, the third hybrid code set further includes hybrid codes of trajectory interpolation points, and the hybrid codes of the trajectory interpolation points are hybrid codes of trajectory points calculated based on the hybrid code of each of the one or more trajectory points according to the preset interpolation method.

In this application, hybrid codes of more trajectory points are obtained in an interpolation manner based on an existing trajectory point, so that a relationship between the trajectory points is closer, and a matching similar trajectory is better found in the process of querying a similar trajectory.

According to a third aspect, this application provides a data processing device, where the device includes:

a first obtaining unit, configured to obtain first information, where the first information includes spatial position data and temporal data of one or more trajectory points of a first trajectory;
a second obtaining unit, configured to obtain a first hybrid code set based on the first information, where the first hybrid code set includes a hybrid code of each trajectory point of the first information, and the hybrid code is obtained through encoding according to an encoding rule of a hybrid code of a preset level in an index database; the hybrid code includes a temporal code of a trajectory point and a spatial code of the trajectory point, the temporal code is obtained based on the temporal data, and the spatial code is obtained based on the spatial position data; and the index database has a multi-level index structure and includes hybrid codes of a plurality of levels, hybrid codes of each level are divided into sets based on hybrid codes of a level to which the hybrid codes of each level belong, there is an indexing relationship between the hybrid codes of each level and the hybrid codes of the level to which the hybrid codes of each level belong, the hybrid codes of the plurality of levels include hybrid codes with trajectory information, the trajectory information is used to indicate a trajectory identifier of a trajectory to which the hybrid code belongs and a trajectory length of the trajectory to which the hybrid code belongs, and a trajectory length of a trajectory is a quantity of hybrid codes whose trajectory identifiers stored in the index database indicate a same trajectory;
a query unit, configured to query the index database based on each hybrid code in the first hybrid code set according to a query device of a multi-level index structure, to obtain a second hybrid code set, where a hybrid code in the second hybrid code set is a hybrid code with trajectory information; and the hybrid code in the second hybrid code set is mapped to trajectory information of m candidate similar trajectories, where m is an integer; and
a third obtaining unit, configured to obtain N similar trajectories based on a trajectory length of the first trajectory and the trajectory information of the m candidate similar trajectories, where N is an integer less than or equal to m.

In a possible implementation, the query unit is specifically configured to:
compare each hybrid code in the first hybrid code set with a hybrid code in the index database according to the query device of the multi-level index structure, to obtain the second hybrid code set, where the hybrid code in the second hybrid code set is a hybrid code that is in the index database and that is the same as a hybrid code in the first hybrid code set, and/or a lower-level hybrid code and/or a higher-level hybrid code that correspond/corresponds to a hybrid code that is in the index database and that is the same as a hybrid code in the first hybrid code set.

In a possible implementation, the first information further includes attribute data of the first trajectory, the trajectory information further includes attribute information of a trajectory indicated by the trajectory information, and the attribute information is obtained based on attribute data of the trajectory indicated by the trajectory information; and the query unit is specifically configured to:

compare each hybrid code in the first hybrid code set with a hybrid code in the index database according to the query device of the multi-level index structure, to obtain a first matching hybrid code, where the first matching hybrid code is a hybrid code that is in the index database and that is the same as a hybrid code in the first hybrid code set, and/or a lower-level hybrid code and/or a higher-level hybrid code that correspond/corresponds to a hybrid code that is in the index database and that is the same as a hybrid code in the first hybrid code set; and obtain the second hybrid code set based on the first matching hybrid code, where the hybrid code in the second hybrid code set is a hybrid code that is in the first matching hybrid codes and whose attribute information includes the attribute information of the first trajectory.

In a possible implementation, the query unit is specifically configured to:

determine a hybrid code of a target level based on a first hybrid code in the first hybrid code set, where the target level is a level to which the preset level belongs; perform query based on the hybrid code of the target level, to obtain a first candidate hybrid code set; and compare the first hybrid code with the first candidate hybrid code set.

In a possible implementation, the second obtaining unit is specifically configured to:

encode the spatial position data of the one or more trajectory points according to an encoding rule of a spatial code in the hybrid code of the preset level, to obtain a spatial code of each of the one or more trajectory points; encode the temporal data of the one or more trajectory points according to an encoding rule of a temporal code in the hybrid code of the preset level, to obtain a temporal code of each of the one or more trajectory points; and combine the spatial code and the temporal code of each of the one or more trajectory points to obtain the hybrid code of each trajectory point.

In a possible implementation, the first information further includes attribute data of the first trajectory, and the second obtaining unit is specifically configured to:

encode the spatial position data of the one or more trajectory points according to an encoding rule of a spatial code in the hybrid code of the preset level, to obtain a spatial code of each of the one or more trajectory points; encode the temporal data of the one or more trajectory points according to an encoding rule of a temporal code in the hybrid code of the preset level, to obtain a temporal code of each of the one or more trajectory points; encode the attribute data of the first trajectory to obtain an attribute code of the first trajectory; and combine the spatial code and the temporal code of each of the one or more trajectory points and the attribute code to obtain the hybrid code of each trajectory point.

In a possible implementation, the third obtaining unit is specifically configured to:

calculate a quantity of ith codes, where the quantity of the ith codes is calculated based on a quantity of hybrid codes to which an ith identifier is mapped in the second hybrid code set, the ith identifier is a trajectory identifier of an ith candidate similar trajectory, and a value of i ranges from 1 to m; obtain an ith length, where the ith length is obtained through calculation based on the trajectory length of the first trajectory, or based on a trajectory length of the ith candidate similar trajectory and the trajectory length of the first trajectory; calculate a ratio of the quantity of the ith codes to the ith length, where the ratio is a similarity between the ith candidate similar trajectory and the first trajectory; and screen the N similar trajectories based on m similarities obtained through calculation.

In a possible implementation, the first hybrid code set further includes hybrid codes of trajectory interpolation points, and the trajectory interpolation points are obtained based on the one or more trajectory points according to a preset interpolation device.

In a possible implementation, the first hybrid code set further includes hybrid codes of extended trajectory points, and the extended trajectory points are obtained by a preset extension device based on the one or more trajectory points and the trajectory interpolation point.

In a possible implementation, the index database is a database constructed based on a spatial-temporal grid model, the spatial-temporal grid model includes a plurality of levels of spatial-temporal grids, each spatial-temporal grid level is determined based on a spatial level and a temporal division granularity that are set, and each spatial-temporal grid is mapped to a hybrid code; and the plurality of levels of the index database are r levels, r is greater than 1, and the r levels of the index database respectively correspond to r spatial-temporal grid levels.

In a possible implementation, the index database is mapped to a trajectory database, and the trajectory database is used to store raw data of a plurality of trajectories included in the index database; and the raw data includes a plurality of pieces of data in temporal data, spatial position data, and attribute data of the plurality of trajectories.

According to a fourth aspect, this application provides a trajectory expression model construction device, and the device includes:

an obtaining unit, configured to obtain trajectory data of a second trajectory, where the trajectory data includes spatial position data and temporal data of one or more trajectory points of the second trajectory; and
an encoding unit, configured to perform encoding, based on the trajectory data code, to obtain a third hybrid code set expressing the second trajectory, where the third hybrid code set includes a hybrid code of each trajectory point of the second trajectory, and the hybrid code is obtained through encoding according to an encoding rule of a hybrid code of a preset level in an index database; and the foregoing hybrid code includes temporal code of the trajectory point and spatial code of the trajectory point, the foregoing temporal code is obtained based on the foregoing temporal data, and the foregoing spatial code is obtained based on the foregoing spatial position data; and the index database includes r-level hybrid codes, r is greater than 1, the r-level hybrid codes are hybrid codes mapped to spatial-temporal grids in r spatial-temporal grid levels, and the r levels are one-to-one mapped to the r spatial-temporal grid levels. The r spatial-temporal grid levels are r levels in a plurality of levels included in the preset spatial-temporal grid model, and each spatial-temporal grid level in the foregoing spatial-temporal grid model is determined based on a spatial level and a temporal division granularity that are set.

In a possible implementation, the encoding unit is specifically configured to:

encode the spatial position data of the one or more trajectory points according to an encoding rule of a spatial code in a hybrid code of the preset level, to obtain a spatial code of each of the one or more trajectory points;
encode the temporal data of the one or more trajectory points according to an encoding rule of a temporal code in the hybrid code of the preset level, to obtain a temporal code of each of the one or more trajectory points; and
combine the spatial code and the temporal code of each of the one or more trajectory points to obtain the hybrid code of each trajectory point, where the hybrid codes of the one or more trajectory points form the third hybrid code set.

In a possible implementation, the trajectory data further includes attribute data of the second trajectory, and the encoding unit is specifically configured to:

encode the spatial position data of the one or more trajectory points according to an encoding rule of a spatial code in a hybrid code of the preset level, to obtain a spatial code of each of the one or more trajectory points;
encode the temporal data of the one or more trajectory points according to an encoding rule of a temporal code in the hybrid code of the preset level, to obtain a temporal code of each of the one or more trajectory points;
encode the attribute data of the second trajectory to obtain the attribute code of the second trajectory; and
combine the spatial code and the temporal code of each of the one or more trajectory points and the attribute code to obtain the hybrid code of each trajectory point, where the hybrid codes of the one or more trajectory points form the third hybrid code set.

In a possible implementation, the third hybrid code set further includes hybrid codes of trajectory interpolation points, and the hybrid codes of the trajectory interpolation points are hybrid codes of trajectory points calculated based on the hybrid code of each of the one or more trajectory points according to the preset interpolation device.

According to a fifth aspect, this application provides a data processing device, including a processor, a communication interface, and a memory, where the memory is configured to store program instructions and/or data, and the processor is configured to execute the program instructions stored in the memory, to enable the device to perform the method according to any one of the first aspect or the possible implementations of the first aspect.

According to a sixth aspect, this application provides a trajectory representation model construction device, including a processor, a communication interface, and a memory, where the memory is configured to store program instructions and/or data, and the processor is configured to execute the program instructions stored in the memory, to enable the device to perform the method according to any one of the second aspect or the possible implementations of the second aspect.

According to a seventh aspect, this application provides a computer readable storage medium, where the computer readable storage medium stores a computer program, and the computer program is executed by a processor to implement the method according to any one of the first aspect; or the computer program is executed by the processor to implement the method according to any one of the second aspect or the possible implementations of the second aspect.

According to an eighth aspect, this application provides a computer program product. When the computer program product is read and executed by a computer, the method according to any one of the first aspect or any one of the second aspect is performed.

According to a ninth aspect, this application provides an apparatus, where the apparatus includes a processor, a communication interface, and a memory, and the apparatus is configured to perform the method according to any one of the first aspect or the second aspect.

In a possible implementation, the apparatus is a chip or a system on chip (SoC).

In conclusion, in this application, a hybrid code is obtained by encoding with reference to temporal information and spatial information of a trajectory point of a trajectory, a multi-level index database is constructed based on the hybrid code, and the trajectory information is mapped to the hybrid code of the index database. On this basis, similar trajectories of the target trajectories are queried in the index database, so that accuracy of trajectory query can be improved, complexity of trajectory similarity calculation can be reduced, and efficiency in querying a similar trajectory can be improved.

## BRIEF DESCRIPTION OF DRAWINGS

The following briefly describes accompanying drawings that need to be used in embodiments of this application.

FIG. 1 is a schematic diagram of a scenario according to an embodiment of this application;
FIG. 2 is a schematic diagram of spatial grid division according to an embodiment of this application;
FIG. 3 is a schematic diagram of spatial level encoding according to an embodiment of this application;
FIG. 4 is a schematic diagram of a structure of a spatial-temporal grid according to an embodiment of this application;
FIG. 5 is a schematic diagram of temporal division according to an embodiment of this application;
FIG. 6 and FIG. 7 are schematic diagrams of a spatial-temporal grid obtained through division based on a temporal granularity according to an embodiment of this application;
FIG. 8 is a schematic diagram of a structure of a spatial-temporal grid model according to an embodiment of this application;
FIG. 9 is a schematic diagram of a structure of and an encoding relationship between spatial-temporal grid levels according to an embodiment of this application;
FIG. 10 is a schematic flowchart of a data processing method according to an embodiment of this application;
FIG. 11A is a schematic diagram of trajectories at different spatial levels according to an embodiment of this application;
FIG. 11B is a schematic diagram of mapping a trajectory to a spatial-temporal grid according to an embodiment of this application;
FIG. 12 is a schematic diagram of a structure of an index tree according to an embodiment of this application;
FIG. 13 is a schematic flowchart of another data processing method according to an embodiment of this application;
FIG. 14 is a schematic diagram of an adjacent grid according to an embodiment of this application;
FIG. 15 is a schematic diagram of trajectory extension according to an embodiment of this application;
FIG. 16 is a schematic diagram of a logical structure of a device according to an embodiment of this application;
FIG. 17 is a schematic diagram of a logical structure of another device according to an embodiment of this application;
FIG. 18 is a schematic diagram of a hardware structure of a device according to an embodiment of this application; and
FIG. 19 is a schematic diagram of a hardware structure of another device according to an embodiment of this application.

## DESCRIPTION OF EMBODIMENTS

The following describes embodiments of this application with reference to accompanying drawings.

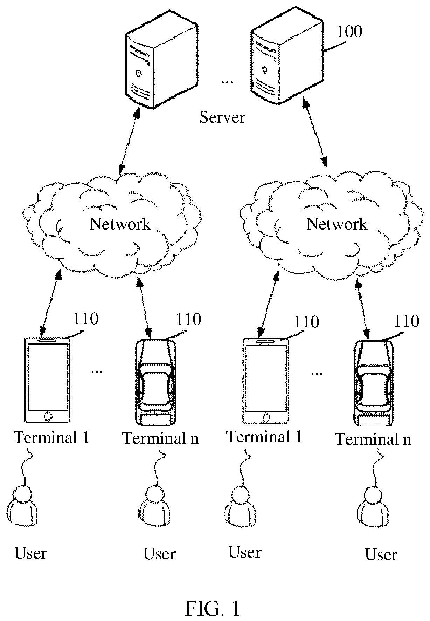

FIG. 1 is a schematic diagram of an architecture of a possible application system to which a data processing method is applicable according to an embodiment of this application. As shown in FIG. 1, the system architecture may include one or more servers 100 and one or more user terminals (or devices) 110.

The server 100 may include but is not limited to a background server, a data processing server, or the like. The server 100 may communicate with a plurality of user terminals 110 by using the Internet. The server 100 provides a data processing service for the user terminal 110. A corresponding server-side program needs to run on the server 100 to provide a corresponding data processing service, such as a database service, data computing, and decision execution.

The user terminal 110 may install and run a related application (or APP). An application is a program that provides a local service to a customer. For example, the local service may include but is not limited to: obtaining spatial position information of the user terminal 110 and sending the information to the server 100, receiving similar trajectory information sent by the server 100, and the like.

The user terminal 110 in this embodiment of this solution may include but is not limited to any vehicle, a vehicle-mounted device, a handheld electronic product based on an intelligent operating system, and the like. The user terminal 110 may perform human-computer interaction with a user by using input devices such as a keyboard, a virtual keyboard, a touchpad, a touchscreen, and a voice-activated device. For example, the user terminal 110 may be a smartphone, a tablet computer, or a personal computer. The intelligent operating system includes but is not limited to any operating system that enriches device functions by providing various mobile applications for a mobile device, such as Android (Android™), iOS™, and Windows Phone™. In addition, the user terminal 110 may further include a vehicle such as aircraft or a boat, or include a positioning device carried by these vehicles, or the like.

It should be noted that the system architecture to which the data method provided in this embodiment of this application is applied is not limited to the scenario described above, and any scenario to which the data processing method provided in this embodiment of this application is applied is a scenario to which this embodiment of this application is applicable. Details are not described herein again.

Before the data processing method provided in embodiments of this application is described, related concepts in this application are first described.

1. Discrete global grid system model

The geospace is divided, by using a division model, into a multi-level system of discrete patches that are of similar areas and shapes, infinitely subdividable, seamless, and non-overlapping, to form the spatial level recursive division and the multi-scale nesting relationship of the divided patches in the geospace. Each of the multi-scale grids or grid bodies may be assigned a unique code. The code can be used as a position identifier in the geospace. All information and data on the earth can fall within one or more grids and assigned a corresponding grid code, thereby implementing unified organization, computing, and servicing of big data on the earth.

In a specific embodiment, the discrete global grid may be partitioned by using a plurality of methods. The plurality of methods may include, for example, an equal longitude and latitude grid division method, a spatial filling curve grid division method, and a regular polyhedron grid division method.

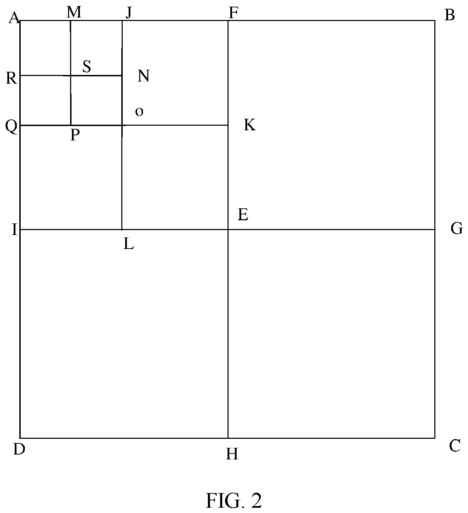

In this embodiment, the quadtree grid system of equal longitude and latitude is used as an example. First, the geospace plane is divided into four parts by using the intersection point of the primary meridian and the equator as the center, which indicates a level-1 grid. Each grid continues to be sub-partitioned by using a quadtree division method to obtain lower-level grids, and the like, until a partition level with a required granularity is reached. In the division process, based on a spatial filling curve, a mapping is formed between each grid and an actual geographic space, and each grid is assigned a unique grid code. Based on the discrete grid system, all objects on the earth can be mapped to the grid codes of corresponding geographical positions. For ease of understanding, refer to FIG. 2.

In FIG. 2, it is assumed that a region ABCD is a planar region formed through tiled expansion of the earth surface, that is, the planar region includes areas of all regions on the earth. A quadtree grid system is used for grid division of the region ABCD. It is assumed that a line segment FH represents the primary meridian, a line segment IG represents the equator, and E represents the intersection point of the primary meridian FH and the equator IG. In this case, the four grid regions obtained by dividing the geospace plane into four parts with the intersection point of the primary meridian FH and the equator IG as the center are a region AFEI, a region FBGE, a region EGCH, and a region IEHD. Further, each of the four regions is equally divided into four grid regions separately. A region AFEI is used as an example for description. Four grid regions obtained by equally dividing the region AFEI are a region AJOQ, a region JFKO, a region OKEL, and a region QOLI. Further, each of the four regions obtained by equally dividing the region AFEI is further divided into four grid regions. The region AJOQ is used as an example for description, where the region AJOQ is equally divided into four grid regions: a region AMSR, a region MJNS, a region SNOP, and a region RSPQ. The division is continued until a smallest region obtained through division is a region of a required granularity.

The foregoing region division may be considered as division of region levels. For example, the region ABCD is divided into four regions. The four regions obtained through the division may be referred to as first-level regions, and each of the four first-level regions may be assigned a unique code. The code may be a binary number, a quaternary number, a decimal number, or may be in the form of a character, or the like. In this embodiment of this application, an example in which the code is a binary number is used for description. Then, the unique codes of the region AFEI, the region FBGE, the region EGCH, and the region IEHD may be assumed to be 00, 01, 10, and 11.

Further, the four regions obtained by equally dividing the region AFEI are the region AJOQ, the region JFKO, the region OKEL, and the region QOLI, which may be referred to as level-2 regions. It is assumed that unique codes of the region AJOQ, the region JFKO, the region OKEL, and the region QOLI may be 0000, 0001, 0010, and 0011.

Further, the four regions obtained by equally dividing the region AJOQ are the region AMSR, the region MJNS, the region SNOP, and the region RSPQ, which may be referred to as level-3 regions. It is assumed that unique codes of the region AMSR, the region MJNS, the region SNOP, and the region RSPQ may be 000000, 000001, 000010, and 000011.

The foregoing describes the division and encoding of the three grid region levels of the first level, the second level, and the third level as an example, where the first level, the second level, and the third level may be from low to high, and the higher the grid region level, the smaller the area of the grid region. In addition, a code prefix of the higher-level grid region includes a code of a corresponding lower-level grid region. In this application, a lower-level code corresponding to a higher-level code refers to a lower-level code to which the higher-level code belongs. For example, a code prefix of the second-level grid region AJOQ is a code 00 of the first-level grid region AFEI, and a code prefix of the third-level grid region AMSR is a code 0000 of the second-level grid region AJOQ.

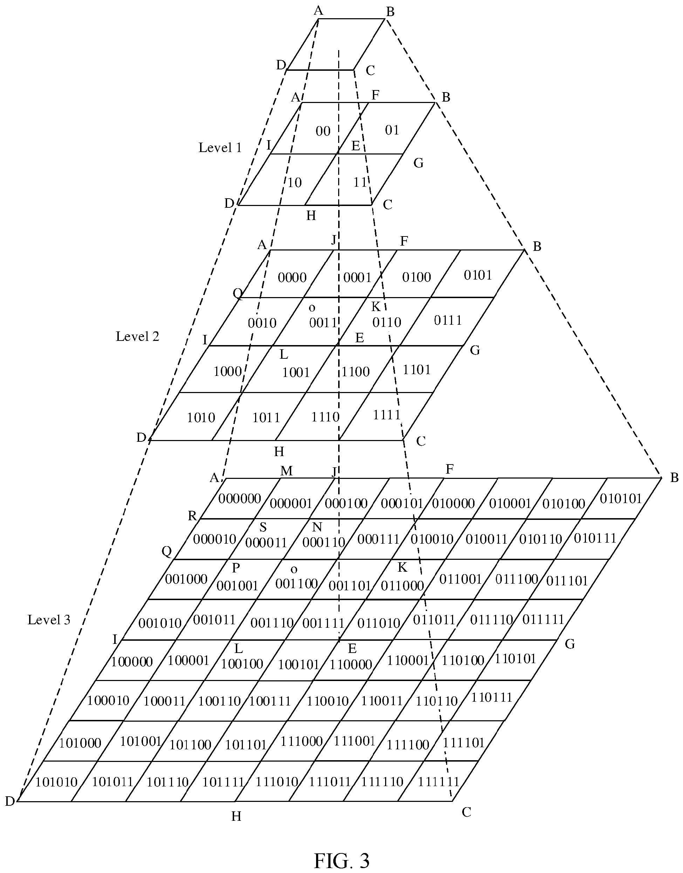

In FIG. 2, for a rule for dividing higher-level grids of the first-level grid regions FBGE, EGCH, and IEHD and an encoding rule of each level, refer to specific descriptions of the grid region AJOQ, and refer to the levels and the encoding shown in FIG. 3. Details are not described herein again.

In this application, the foregoing region level may be referred to as a spatial level, and the foregoing code of each grid region may be referred to as a spatial code. The foregoing encoding of the grid region is merely an example, and the code of each grid is not specifically limited in this solution.

In addition, other global grid division methods, such as the spatial filling curve grid division method, and the regular polyhedron grid division method, also have the foregoing region area change rule and encoding rule of each level grid, and details are not described herein again.

In another possible implementation, in the discrete global grid system model provided in this embodiment of this application, sizes of grid regions at a same level may be different. For example, FIG. 2 is still used as an example. In FIG. 2, there are only three first-level grid regions: a region AFEI, a region FBGE, and a region IGCD. That is, grid regions of different sizes may also belong to the same grid level. Then, a higher-level grid is further divided based on the first-level grid region, and sizes of grids at a same level in the higher-level grid may also be different.

2. Spatial-temporal grid model

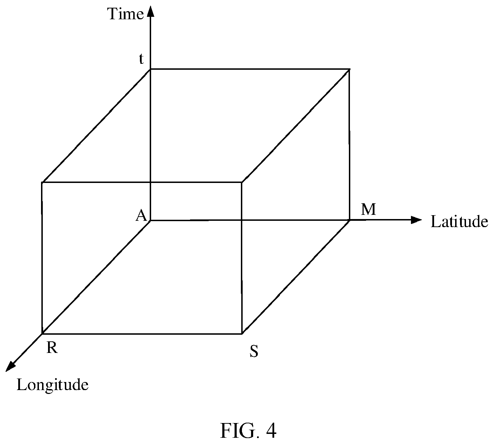

The spatial-temporal grid model is a discrete global unified grid encoding model which combines a spatial attribute and a temporal attribute based on the discrete global grid. For ease of understanding, refer to FIG. 4. As can be seen in FIG. 4, the spatial-temporal grid may be a three-dimensional grid formed by three dimensions: longitude, latitude, and time. The grid region AMSR in FIG. 2 is used as an example for description. In FIG. 4, a grid obtained when only longitude and latitude are considered is the grid region AMSR, and an obtained grid is a three-dimensional grid when a temporal dimension is considered.

In this embodiment of this application, division of the spatial-temporal grid includes two parts: First, division of the spatial grid is performed; and then based on this, information of a temporal dimension is added to obtain a three-dimensional spatial-temporal grid. For division of the spatial grid, refer to the description in the foregoing discrete global grid system model. The following describes a division manner of the temporal grid.

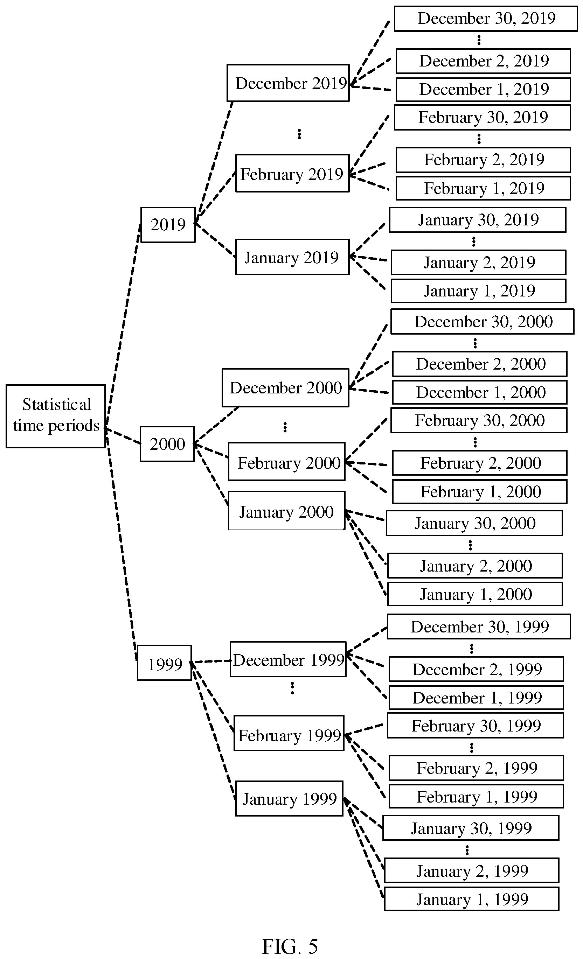

In this embodiment of this application, temporal division is also performed based on a preset temporal level. A statistical time period is first determined. The statistical time period is a planned time period for data collection and storage. For example, in this embodiment of this application, a trajectory database needs to be established, and it is assumed that the collection and storage of various trajectory data nationwide from 1999 to 2019 has been determined; in this case, the time period for the statistics is 1999 to 2019. Then, the statistical time may be divided into levels according to a division granularity such as year, month, day, hour, minute, or second. The temporal division granularity may also be a user-defined time period, which is not limited in this solution. For example, an example in which the statistical period is 1999 to 2019 is still used for description, and refer to FIG. 5.

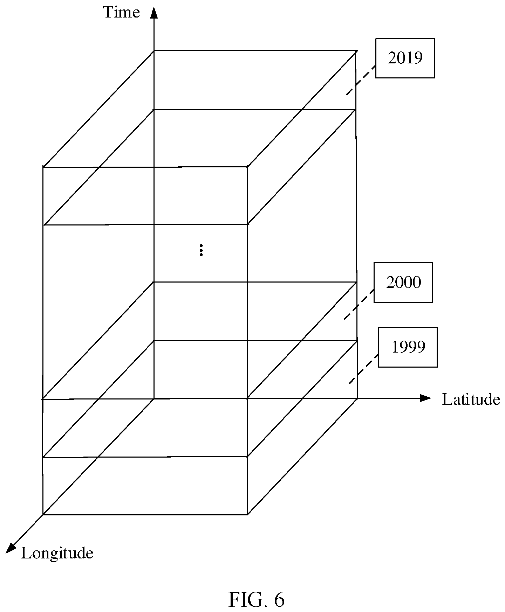

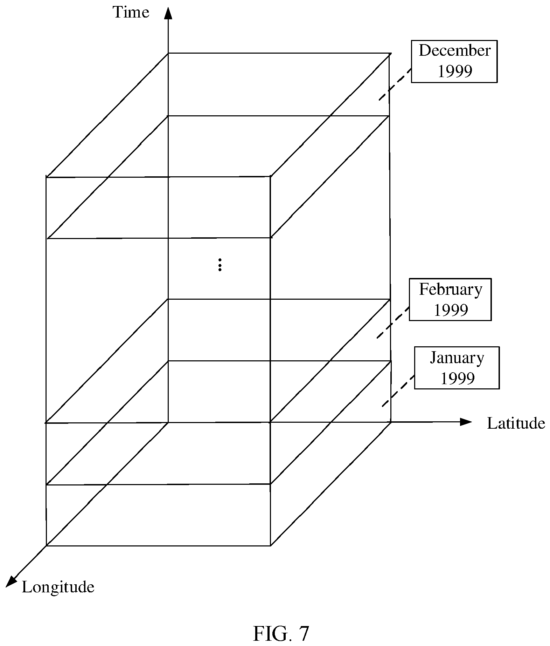

In FIG. 5, it is assumed that a minimum division granularity is day. In this case, a statistical time period may be divided by year to obtain a 20-year time period from 1999 to 2019. Each year in the 20-year time period may correspond to one grid. For example, refer to FIG. 6. FIG. 6 shows, for example, a schematic diagram of obtaining a spatial-temporal grid through division according to the division granularity of year with reference to spatial information and temporal information. Then, in FIG. 5, the time period of each year is further divided according to a division granularity of month, and then the time period of each month is further divided according to the division granularity of day. For example, refer to FIG. 7 for a grid whose granularity is month. FIG. 7 shows a schematic diagram of a spatial-temporal grid whose temporal division granularity is month by using 1999 as an example. For a schematic diagram of a spatial-temporal grid whose temporal division granularity is day, refer to a schematic diagram whose granularity is month. Details are not described herein again.

Each spatial-temporal grid may correspond to one temporal code, and there are a plurality of temporal encoding manners. In this embodiment of this application, for example, the temporal code is represented in an intuitive mode of "yyyymmddhhmmss", where "yyyy" represents a year, "mm" represents a month, "dd" represents a day, "hh" represents an hour, "mm" represents a minute, and "ss" represents a second. For example, assuming that the set temporal division granularity is one hour, and the to-be-encoded time is 10:00 on June 1, 2020, in this case, the temporal code of the time may be expressed as "2020060110". Similarly, the temporal code may be a binary number, a quaternary number, a decimal number, or may be in the form of a character, or the like.

In this embodiment of this application, a temporal code of a time period obtained through coarse-grained division may be referred to as a lower-level temporal code, and a temporal code of a time period obtained through fine-grained division may be referred to as a higher-level temporal code. For example, relative to a temporal code whose division granularity is month, a temporal code whose division granularity is year may be referred to as a lower-level temporal code, and a temporal code whose division granularity is day may be referred to as a higher-level temporal code. A prefix of a higher-level temporal code includes a corresponding lower-level temporal code. The corresponding lower-level temporal code herein refers to a lower-level temporal code to which the higher-level temporal code belongs, that is, a time indicated by the higher-level temporal code is included in a time range indicated by the lower-level temporal code.

The year of 1999 is still used as an example for description. For each level that is obtained by dividing the time period 1999, for example, a level whose granularity is month and a level whose granularity is day, a prefix of a temporal code of a grid each of these levels includes a temporal code of a spatial-temporal grid in the year of 1999. It is assumed that the temporal code of the spatial-temporal grid in the year of 1999 is 1999. In this case, temporal codes of 12 spatial-temporal grids obtained by dividing the year of 1999 according to a granularity of month are 199901, 199902, 199903, ..., 199911, and 199912; and temporal codes of the 30 spatial-temporal grids obtained by dividing January 1999 according to a granularity of day are 19990101, 19990102, 19990103, ..., 19990129, and 19990130. It can be learned that a prefix of a higher-level temporal code includes a corresponding lower-level temporal code.

It should be noted that the temporal code may alternatively be represented in another manner. For example, the temporal code may also be represented by mapping time to another identifier. This solution imposes no limitation on representation of the temporal code.

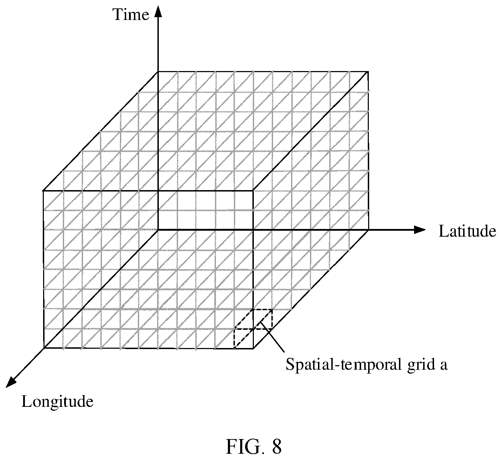

Based on the foregoing description, a spatial-temporal grid model may be constructed after the spatial level and the temporal division granularity are determined. For example, the spatial-temporal grid model may be as shown in FIG. 8. Each spatial-temporal grid in FIG. 8 includes corresponding spatial information and temporal information. For example, for a spatial-temporal grid a indicated by dotted lines in FIG. 8, it may be assumed that a longitude and a latitude that are corresponding to the spatial-temporal grid a are the longitude and latitude of the Tiananmen Square area in Beijing, and temporal information corresponding to the spatial-temporal grid a is the time period of June 1, 2019. That is, the spatial information mapped to the spatial-temporal grid a at this time is longitude and latitude information of the Beijing Tiananmen Square, and the mapped temporal information is June 1, 2019.

In this embodiment of this application, each spatial-temporal grid in the spatial-temporal grid model is corresponding to a unique spatial-temporal hybrid code, and the spatial-temporal hybrid code may be formed by combining the foregoing code of the spatial grid region, that is, the spatial code, and the code of the temporal information, that is, the temporal code.

Specifically, a spatial code and a temporal code of each spatial-temporal grid may be calculated based on the foregoing description, and the spatial code and the temporal code may be combined to obtain a spatial-temporal hybrid code of the spatial-temporal grid. Specific manners of combining the spatial code and the temporal code may include a plurality of manners such as temporal-spatial collinearity combination manner, spatial-temporal collinearity combination manner, temporal-spatial-temporal collinearity combination manner, and temporal-spatial cross hybrid collinearity combination manner.

The temporal-spatial collinearity combination manner means that the spatial-temporal hybrid code is obtained by concatenating the temporal code and the spatial code, and the obtained spatial-temporal hybrid code may be in a form of an integer or may be in a form of a character string. For example, assuming that the obtained temporal code is "2019100313" and the spatial code is 100101101110, in this case, "2019100313" and 100101101110 are concatenated to obtain a spatial-temporal hybrid code 2019100313100101101110 or "2019100313100101101110". The spatial-temporal hybrid code 2019100313100101101110 is in the form of an integer, and the spatial-temporal hybrid code "2019100313100101101110" is in the form of a character string. Alternatively, the temporal code may be converted into binary and then concatenated.

The spatial-temporal collinearity combination mode means that spatial-temporal hybrid code is obtained by concatenating the spatial code and the temporal code. For example, the obtained spatial code 100101101110 and the temporal code "2019100313" are concatenated to obtain the spatial-temporal hybrid code 1001011011102019100313. Similarly, the spatial-temporal hybrid code obtained through concatenation may be in a form of an integer or may be in a form of a character string. For a specific example, refer to the description in the previous paragraph.

The temporal-spatial-temporal collinearity combination manner means that the spatial code is embedded in the middle of the temporal code. For example, the foregoing obtained spatial code 100101101110 is embedded in the middle of the temporal code "2019100313" to obtain the spatial-temporal hybrid code 2019100101101110100313. A specific embedding operation may be performed based on a preset setting, which is not limited in this solution. Similarly, the spatial-temporal hybrid code obtained through concatenation may be in a form of an integer or may be in a form of a character string. For a specific example, refer to the description in the previous paragraph.

The temporal-spatial cross hybrid collinearity combination manner means that both the spatial code and the temporal code are converted into numbers of a same type, such as binary, quaternary, or decimal, and then a Morton order map operation is performed on the converted spatial code and temporal code to obtain the spatial-temporal hybrid code. The Morton order map operation may be crossing in the form of "spatial code + temporal code", or may be crossing in the form of "temporal code + spatial code". Optionally, after the spatial-temporal hybrid code is obtained by performing the Morton order map operation, the spatial-temporal hybrid code may be further converted into an integer of another number system, or converted into the form of a character string form, or the like.

For example, for the spatial-temporal grid a in FIG. 8, the spatial code is obtained through encoding based on the longitude and latitude information of Beijing Tiananmen Square, and the temporal code is obtained through encoding based on June 1, 2019; and then the spatial code and the temporal code are combined according to the foregoing combination manner to obtain the spatial-temporal hybrid code, where the spatial-temporal hybrid code is a unique code corresponding to the spatial-temporal grid a.

In this embodiment of this application, a spatial-temporal grid is of a specified level, and division of the level may be determined based on a preset spatial level and a preset temporal division granularity. For example, it is assumed that the preset spatial levels include n1, n2, n3, and n4, the n1, n2, n3, and n4 levels are levels in ascending order, and the temporal division granularities include year, month, day, and hour. Then, the spatial-temporal grid that is mapped to the spatial grid of the spatial level n1 and the temporal grid obtained through division according to the temporal division granularity of year is the spatial-temporal grid of the first level; the spatial-temporal grid that is mapped to the spatial grid of the spatial level n2 and the temporal grid obtained through division according to the temporal division granularity of month is the spatial-temporal grid of the second level; the spatial-temporal grid that is mapped to the spatial grid of the spatial level n3 and the temporal grid obtained through division according to the temporal division granularity of day is the spatial-temporal grid of the third level; and the spatial-temporal grid that is mapped to the spatial grid of the spatial level n4 and the temporal grid obtained through division according to the temporal division granularity of hour is the spatial-temporal grid of the fourth level.

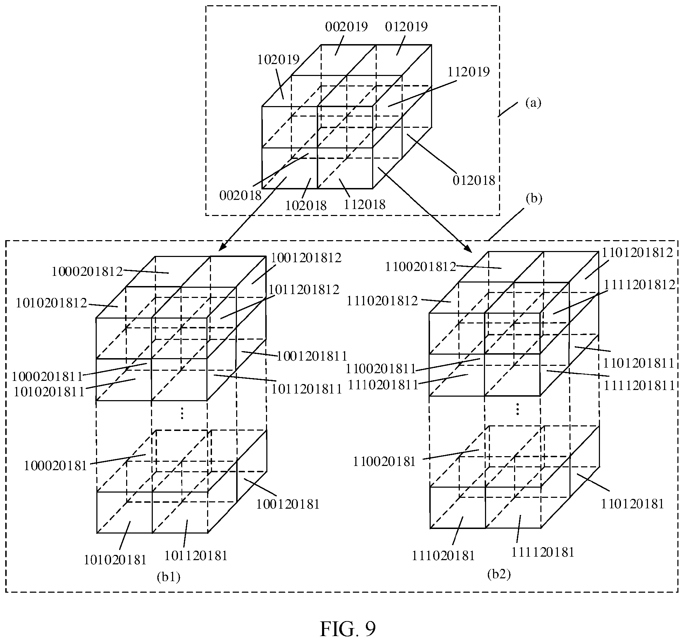

For the temporal-spatial hybrid code mapped to the spatial-temporal grid, the spatial code part of the spatial-temporal hybrid code still has an attribute that a higher-level spatial code prefix includes a corresponding lower-level spatial code; and the temporal code part of the temporal-spatial hybrid code still has an attribute that a higher-level temporal code prefix includes a corresponding lower-level temporal code. The lower-level spatial-temporal hybrid code corresponding to the higher-level spatial-temporal hybrid code may also be said to be the lower-level spatial-temporal hybrid code to which the higher-level spatial-temporal hybrid code belongs. For ease of understanding, refer to FIG. 9.

In FIG. 9, (a) and (b) are two adjacent spatial-temporal grid levels. In the spatial-temporal grid level (a), it is assumed that eight spatial-temporal grids are included, and spatial-temporal hybrid codes of the eight spatial-temporal grids are 002018, 012018, 102018, 112018, 002019, 012019, 102019, and 112019. In the eight spatial-temporal hybrid codes, 00, 01, 10, and 11 are spatial codes. It is assumed that the spatial level division manner shown in FIG. 3 is used. In this case, 00, 01, 10, and 11 are level-1 spatial codes. In the eight spatial-temporal hybrid codes, 2018 and 2019 are temporal codes, and the division granularity is year.

In the spatial-temporal grid level (b), higher-level spatial-temporal grids of 102018 and 112018 are shown as an example, (b1) is a higher-level spatial-temporal grid corresponding to the spatial-temporal grid of 102018; that is, the spatial-temporal hybrid code 102018 is a hybrid code to which the spatial-temporal hybrid code in (b1) belongs. (b2) is a higher-level spatial-temporal grid corresponding to the spatial-temporal grid of 112018; that is, the spatial-temporal hybrid code 112018 is a hybrid code to which the spatial-temporal hybrid code in (b2) belongs, (b1) includes 48 spatial-temporal hybrid codes. In the 48 spatial-temporal hybrid codes, 1000, 1001, 1010, and 1011 are spatial codes. It is assumed that the spatial level division manner shown in FIG. 3 is used. In this case, 1000, 1001, 1010, and 1011 are level-2 spatial codes. In the 48 spatial-temporal hybrid codes, 20181, ..., 201811, and 201812 are temporal codes. A division granularity is month, and therefore 12 months may be obtained through division.

It can be seen that the prefix (10) of the spatial code in the spatial-temporal hybrid code included in (b1) includes the spatial code (10) of the spatial-temporal hybrid code of a corresponding lower-level (level (a)) spatial-temporal grid; and the prefix (2018) of the temporal code in the spatial-temporal hybrid code included in (b1) includes the temporal code (2018) of the spatial-temporal hybrid code of corresponding lower-level (level (a)) spatial-temporal grid. For (b2), refer to the related description of (b1), and details are not described herein again.

It should be noted that only the spatial (temporal) code prefix of the higher-level spatial-temporal grid divided within the range of the spatial-temporal grid included in the lower-level spatial-temporal grid includes the spatial (temporal) code of the lower-level spatial grid, and the spatial (temporal) code prefix of the higher-level spatial-temporal grid does not include the spatial (temporal) code of another lower-level spatial-temporal grid. For example, in FIG. 9, the prefix (10) of the spatial code in (b1) includes only the spatial code (10) of the spatial-temporal grid 102018 in the level (a), and does not include the spatial code (11) of the spatial-temporal grid 112018 in the level (a).

In addition, a quantity of digits of the prefix of the spatial code is determined based on a quantity of digits of the spatial code of the lower level. For example, in FIG. 9, the spatial code of the lower level (level (a)) is two digits, and the prefix of the spatial code of the higher level (level (b)) is also two digits. Similarly, a quantity of digits of the prefix of the temporal code is determined based on a quantity of digits of the temporal code of the lower level. For example, in FIG. 9, the temporal code of the lower level (level (a)) is four digits, and the prefix of the temporal code of the higher level (level (b)) is also four digits.

The spatial-temporal hybrid code in FIG. 9 is described by using a code obtained through concatenation in a spatial-temporal collinearity combination manner as an example. Alternatively, the spatial-temporal hybrid code may also be a code obtained through concatenation in a combination manner such as the temporal-spatial collinearity combination manner or the temporal-spatial cross hybrid collinearity combination manner. This is not limited in this solution.

In another possible implementation, the spatial grid in the spatial-temporal grid model provided in this embodiment of this application is not limited to being obtained based on the foregoing discrete global grid system model, or may be obtained based on a discrete regional grid model. The discrete regional grid model is to perform spatial grid division and encoding only for a preset region. For specific implementations of the grid division and encoding, refer to a grid division method and a spatial encoding method in the discrete global grid system model. A preset region may be, for example, a region under the jurisdiction of a country or a region under the jurisdiction of a province. For temporal division and encoding in the spatial-temporal grid model constructed based on the discrete regional grid model, refer to the foregoing detailed description. Details are not described herein again.

Based on the foregoing description, the following describes, by using several embodiments, the data processing method provided in this application. An execution body of the data processing method provided in this embodiment of this application may be a server that establishes a communication connection to the user terminal, or may be the user terminal. An example in which the execution body is the server that establishes a communication connection to the user terminal is used below for description.

**Embodiment 1**

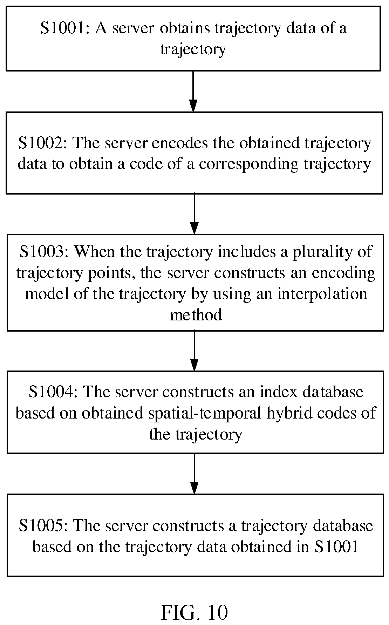

The following first describes a data processing method for constructing and updating a database according to an embodiment of this application. Refer to FIG. 10. The method may include but is not limited to the following steps.

S1001: A server obtains trajectory data of a trajectory.

In a specific embodiment, the trajectory may be a trajectory including one trajectory point, or may be a trajectory including a plurality of trajectory points. The obtained trajectory data may be recorded trajectory data of a historical trajectory, or the obtained trajectory data may be trajectory data periodically sent to the server by a user terminal. The server may be, for example, the server 100 shown in FIG. 1, and the user terminal may be, for example, the user terminal 110 shown in FIG. 1.

The trajectory data may include spatial position information of one or more trajectory points of the trajectory and temporal information at the spatial position. In a possible implementation, the trajectory data may further include some attribute information of an object generating the trajectory. For example, if the object generating the trajectory is a vehicle, the attribute information may include, for example, one or more of a license plate number, a body color, a passenger capacity, and a vehicle price of the vehicle.

For recorded trajectory data of a historical trajectory, if the data is stored in a memory of the server, the data may be directly read from the memory. If the data is stored in another device, the server may obtain the data by performing communication interaction with the device, and the like.

If the user terminal periodically sends the trajectory data to the server, the user terminal may record the trajectory data of the trajectory of the user terminal by using the positioning module, and send the trajectory data to the server. For ease of understanding, the following describes two scenarios as an example.

Scenario 1: Hitchhiking service scenario

In the hitchhiking service scenario, the user terminal may be a vehicle or may be another device in the vehicle, for example, a smartphone or a tablet computer. The user terminal may locate a spatial position of the user terminal by using a positioning module of the user terminal, and record a time at the current spatial position, and then periodically sends the located spatial position information and recorded temporal information of the user terminal to a server. The positioning module herein may be a vehicle-mounted global positioning system (global positioning system, GPS) device, a positioning device in another device in a vehicle, or the like. In a possible implementation, related attribute information such as a vehicle may also be sent to the server together.

Scenario 2: Companion analysis service scenario

A companion herein refers to a person with a similar travel trajectory. In a companion analysis service scenario, the user terminal may be a mobile terminal such as a smartphone, a smartwatch, or a tablet computer carried by a person. Similarly, the user terminal may locate the spatial position of the user terminal by using a positioning module of the user terminal, record time at the current spatial position, and then periodically send the located spatial position information of the user terminal and the recorded temporal information to the server. In a possible implementation, companion -related attribute information may also be sent to the server together.

S 1002: The server encodes the obtained trajectory data to obtain a code of a corresponding trajectory.

In a specific embodiment, the server may encode spatial position information and temporal information of one or more trajectory points that the trajectory passes through, and then obtain a spatial-temporal hybrid code corresponding to each trajectory point with reference to a spatial code and a temporal code. A set of spatial-temporal hybrid codes corresponding to one or more trajectory points that the trajectory passes through are the codes of the trajectory.

Before performing encoding, the server needs to first determine a spatial-temporal grid level for encoding. It can be learned from the foregoing description that different spatial-temporal grid levels have different spatial levels and temporal division granularities. Therefore, the same information is encoded differently at different spatial-temporal grid levels.

In a possible implementation, the spatial-temporal grid level of the spatial-temporal hybrid code may be preset, and is uniformly encoded as a code of a spatial-temporal grid level.

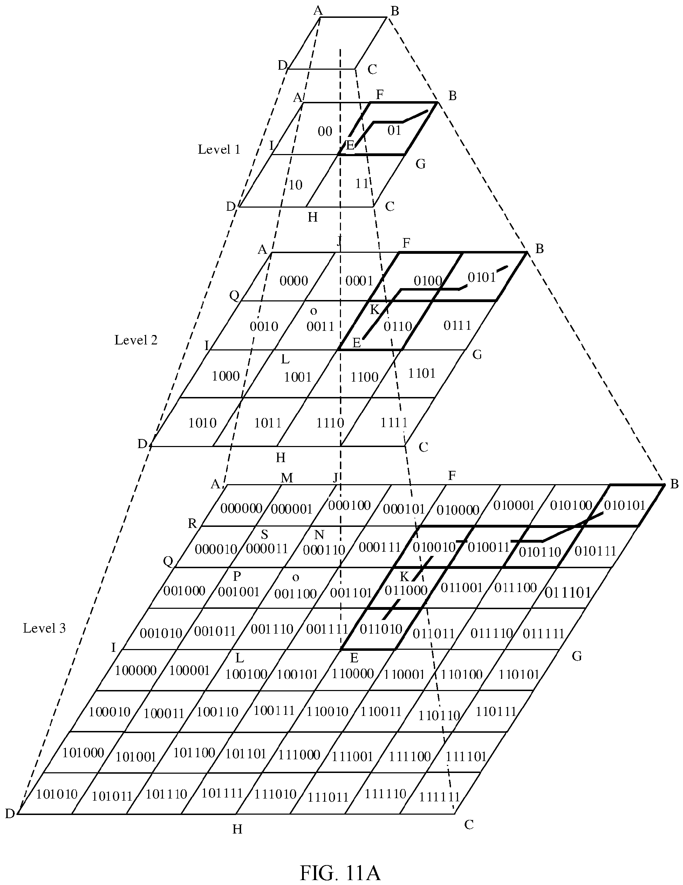

In another possible implementation, different spatial-temporal grid levels for encoding may be set depending on a scenario to which the trajectory belongs. For example, it is assumed that the trajectory is a trajectory of a pedestrian. Because a moving speed of the trajectory of the pedestrian is relatively low, a trajectory range is not large. In this case, a spatial-temporal grid level may be set to a higher level, and a higher level is corresponding to a smaller spatial division granularity and a smaller temporal division granularity, so that the trajectory can be expressed more accurately. For another example, it is assumed that the trajectory is a trajectory of a vehicle or aircraft. Because a moving speed of such a trajectory is relatively high, a trajectory range is relatively large. In this case, the spatial-temporal grid level may be set to a lower level, and a lower level is corresponding to relatively large spatial and temporal division granularities. This ensures that the trajectory is accurately expressed and reduces storage data of the trajectory, thereby saving a storage space. In a specific embodiment, a scenario to which a trajectory belongs may be obtained by analyzing the obtained trajectory data, and then a corresponding spatial-temporal grid level is matched. Alternatively, trajectory data of each trajectory point of a same trajectory may be preprocessed, to determine a moving speed and a moving range of the trajectory, and determine a corresponding spatial-temporal grid level based on the corresponding speed and range. For ease of understanding, the following describes an example with reference to FIG. 11A.

For ease of observation, FIG. 11A is described by using a spatial grid as an example, and the spatial grid may be mapped to a spatial-temporal grid. In FIG. 11A, a spatial grid in bold and black is a grid mapped to a region that a trajectory passes through. It can be learned that for a same trajectory, from the first level to the third level, a higher level of the trajectory occupies more grids, that is, have a larger quantity of codes. Therefore, for a trajectory with a high speed and a large moving range, a lower-level spatial-temporal grid may be selected for encoding and mapping, so that storage space can be saved when the trajectory data is stored. For the trajectory with a low speed and a small moving range, a higher-level spatial-temporal grid may be selected for encoding and mapping, so that the trajectory can be accurately expressed.

After determining the spatial-temporal grid level for encoding, the server may perform encoding based on the obtained trajectory data to obtain a spatial-temporal hybrid code of the trajectory at the determined spatial-temporal grid level.

The following first describes a process in which the server performs encoding based on the spatial position information of the one or more trajectory points that the trajectory passes through to obtain the spatial code.

In this embodiment, an example in which a discrete global quadtree grid encoding method with equal longitude and latitude is used for description. Specifically, the spatial position information of the one or more trajectory points received by the foregoing server may be longitudes and latitudes of these trajectory points. Longitude and latitude coordinates (lat, lon) may be used to represent a spatial position of a trajectory point, where lat represents a latitude of the trajectory point, and lon represents a longitude of the trajectory point.

It is assumed that the spatial level in the determined spatial-temporal grid level for encoding is an nth level, and n is an integer. In this case, the spatial code of the trajectory point (lat, lon) at the nth level may be directly calculated. The following describes a calculation process of the spatial code of the trajectory point (lat, lon) as an example.

First, a row number $Row=\lfloor lat/180*2^n \rfloor$ and a column number $Col=\lfloor lon/360*2^n \rfloor$ of the trajectory point in the nth level spatial grid are calculated. The symbol [] indicates rounding down. Then, the row number Row and the column number Col are respectively converted into binary numbers $(Row)_2$ and $(Col)_2$, and a Morton order map operation is performed in the form of "the number $(Row)_2$ + the column number $(Col)_2$" to obtain the spatial code $(GS)_2$ of the trajectory point. For example, if $(Row)_2$=100111 and $(Col)_2$=011010, $(GS)_2$=100101101110.

In this embodiment, the cross spatial encoding scheme is an encoding scheme based on a Z-order (Z-order) spatial filling curve; and in another possible embodiment, the cross spatial encoding may also be an encoding scheme based on a Hilbert curve, or the like.

In a possible implementation, the row number Row and the column number Col may be separately converted into a form of a quaternary number, a decimal number, or a character string, and then a Morton order map operation is performed to calculate the spatial code of the trajectory point.

The spatial code of the trajectory point may also be calculated in another manner, which is not limited in this solution.

In addition, based on the foregoing description of related concepts, it can be learned that the time can be divided according to different division granularities such as year, month, day, hour, minute, and second, or may be divided based on a user-defined time period. The user-defined time period can be 30 minutes, 2.5 hours, or the like, which is not limited in this solution. In this case, the temporal information may be encoded based on a preset temporal division granularity. For a specific time encoding manner, refer to the description in the spatial-temporal grid model in the foregoing description of related concepts. Details are not described herein again.

After obtaining the spatial code and the temporal code of the trajectory point (lat, lon), the server may combine the spatial code and the temporal code to obtain the spatial-temporal hybrid code. For a manner of combining the spatial code and the temporal code, refer to the description in the spatial-temporal grid model in the foregoing description of related concepts. Details are not described herein again. In this case, the spatial-temporal hybrid code of each trajectory point of the trajectory can be obtained in the foregoing manner.

S1003: When the trajectory includes a plurality of trajectory points, the server constructs an encoding model of the trajectory by using an interpolation method.

In a specific embodiment, the server pre-constructs a spatial-temporal grid model. For the spatial-temporal grid model, refer to the foregoing description of related concepts and the schematic diagram of the spatial-temporal grid model shown in FIG. 8. Details are not described herein again. Each spatial-temporal grid in the spatial-temporal grid model is mapped to a unique spatial-temporal hybrid code. Therefore, after obtaining the spatial-temporal hybrid code of each trajectory point of the trajectory through calculation, the server may map each trajectory point to a spatial-temporal grid corresponding to the spatial-temporal hybrid code of the trajectory point. When the spatial-temporal grids in which the trajectory points are located are not continuously adjacent, the server approximates an actual running trajectory of the trajectory by using the interpolation method.

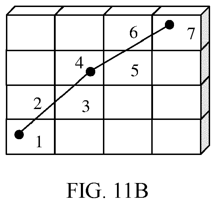

If the spatial-temporal grids in which the trajectory points are located are not continuously adjacent, refer to FIG. 11B. In FIG. 11B, it is assumed that there are three trajectory points of the trajectory, and the three trajectory points are respectively mapped to three spatial-temporal grids: spatial-temporal grid 1, spatial-temporal grid 4, and spatial-temporal grid 7. It can be seen that the three spatial-temporal grids are not continuously adjacent grids, and the three trajectory points are connected by a polyline. It is assumed that the polyline is considered as a trajectory. In this case, the trajectory also passes through four spatial-temporal grids: spatial-temporal grid 2, spatial-temporal grid 3, spatial-temporal grid 5, and spatial-temporal grid 6. Therefore, the server needs to obtain, by using the interpolation method, the spatial position information and the temporal information that are mapped to the four spatial-temporal grids, so as to obtain the spatial-temporal hybrid codes of the four spatial-temporal grids. In this way, the trajectory passing through the seven grids 1, 2, 3, 4, 5, 6 and 7 can be mapped in the spatial-temporal grid model, so as to approximate the actual running trajectory.

For example, in a specific embodiment, the server may obtain new trajectory data by calculating an average value of trajectory data of every two adjacent trajectory points of the plurality of trajectory points, where the new trajectory data may represent a trajectory point of the trajectory. For example, it is assumed that the trajectory includes three trajectory points, and trajectory data of each of the three trajectory points includes a longitude, a latitude, and time, and the three trajectory points are respectively represented by using three coordinates: (lat1, lon1, t1), (lat2, lon2, t2), and (lat3, lon3, t3). Then, an average value of (lat1, lon1, t1) and (lat2, lon2, t2) may be calculated to obtain (lat4, lon4, t4), where lat4=(lat1+lat2)/2, lon4=(lon1+lon2)/2, and t4=(t1+t2)/2. Then, an average value of (lat2, lon2, t2) and (lat3, lon3, t3) is calculated to obtain (lat5, lon5, t5), where lat5=(lat2+lat3)/2, lon5=(lon2+lon3)/2, and t5=(t2+t3)/2. Finally, the trajectory is represented by the five trajectory points (lat1, lon1, t1), (lat4, lon4, t4), (lat2, lon2, t2), (lat3, lon3, t3), and (lat5, lon5, t5). If the spatial-temporal grids mapped to the five trajectory points are still not continuously adjacent spatial-temporal grids, the server may calculate an average value of the trajectory data of every two adjacent trajectory points based on the trajectory data of the five trajectory points to obtain data of new trajectory points. The obtained new trajectory points and the five original trajectory points are used to represent the foregoing trajectory. An iterative operation may be performed based on the foregoing method for calculating the average value of the trajectory data of every two adjacent trajectory points to obtain the new trajectory data, until the spatial-temporal grids mapped to the trajectory points of the trajectory are continuously adjacent.

In another possible implementation, the server may alternatively calculate a continuous function of a plurality of trajectory points that the foregoing trajectory passes through, and then obtain a plurality of new trajectory points through calculation by using the continuous function. These new trajectory points and the original trajectory points may be mapped to continuously adjacent spatial-temporal grids.

The interpolation method for obtaining the new trajectory points of the trajectory is merely described herein as an example, and the interpolation method may alternatively be implemented in another manner. This is not limited in this solution.

In addition, for the new trajectory points obtained through calculation by using the foregoing interpolation method, the trajectory data of the trajectory points may also be encoded by using the foregoing spatial-temporal hybrid encoding method to obtain spatial-temporal hybrid codes of the new trajectory points. The new trajectory points can be mapped to the corresponding spatial-temporal grids by using these spatial-temporal hybrid codes. A code set formed by the spatial-temporal hybrid codes of these new trajectory points and the spatial-temporal hybrid codes of original trajectory points of the trajectory are the codes of the trajectory. The code set may also be referred to as an encoding model of the trajectory, or the code set is an expression model of the trajectory.

In a possible implementation, the server may directly use the spatial-temporal hybrid code of each of one or more trajectory points of the trajectory included in the trajectory data obtained in S1001 as the codes of the trajectory, and does not need to obtain codes of the mapped continuously adjacent spatial-temporal grids and use the codes as the codes of the trajectory.

S1004: The server constructs an index database based on the obtained spatial-temporal hybrid codes of the trajectory.

The index database may be a multi-level multi-dimensional index tree. The multi-level index means that a spatial-temporal grid index includes a plurality of levels from lower levels to higher levels. The multi-dimensional index means that the index includes a plurality of dimensions such as time and space. In some possible implementations, the multi-dimensional index may further include an attribute dimension. Levels in the index tree may be preset. For example, the index tree is a k-level index tree, that is, a kth level is the highest level in the index tree, and k is an integer greater than 1. Each level in the index tree may include one or more nodes.

There is a mapping between the levels in the index tree and the spatial-temporal grid levels of the foregoing spatial-temporal grid model, and the mapping is optional. For ease of understanding, an example is used for description. For example, it is assumed that the spatial-temporal grid model includes 10 levels, and the index tree may include 5 levels. Levels 1, 2, 3, 4, and 5 of the index tree may be mapped to levels 6, 7, 8, 9, and 10 of the spatial-temporal grid model respectively. Alternatively, levels 1, 2, 3, 4, and 5 of the index tree may be mapped to levels 5, 6, 7, 8, and 9 of the spatial-temporal grid model respectively. The level mapping between the index tree and the spatial-temporal grid model is selected and determined according to an actual situation, which is not limited in this solution.

The level mapping between the index tree and the spatial-temporal grid model means that nodes at a level in the index tree are in a one-to-one association and correspondence with some or all spatial-temporal hybrid codes at a spatial-temporal grid level mapped to the level in the index tree. For example, nodes at level 1 of the index tree are in a one-to-one correspondence with some or all of spatial-temporal hybrid codes included at level 6 of the spatial-temporal grid model; and nodes at level 2 of the index tree are in a one-to-one correspondence with some or all spatial-temporal hybrid codes included at level 7 of the spatial-temporal grid model.

In a specific embodiment, the index tree may be constructed by gradually adding newly obtained spatial-temporal hybrid codes of the trajectory. Specifically, the foregoing obtained spatial-temporal hybrid codes of the trajectory are obtained through encoding according to a preset spatial level and a preset time granularity; the preset spatial level and the preset time granularity are mapped to a spatial-temporal grid level; the spatial-temporal grid level is mapped to a level in the index tree, and the level in the index tree may be any level in the index tree. The level in the index tree is referred to as a preset index level below.

In a possible implementation, it can be learned from the related description in S1002 that the spatial-temporal hybrid code of a trajectory may be corresponding to different spatial-temporal grid levels in different scenarios, and therefore the spatial-temporal hybrid code of the trajectory may also be at different levels in the index tree in different scenarios.

After the preset index level is determined, the spatial-temporal hybrid code obtained through encoding according to the preset spatial level and the preset time granularity may be an index of the preset index level in the index tree, or a node at the preset index level in the index tree.

It is assumed that the obtained spatial-temporal hybrid codes of the trajectory are the first batch of codes used to construct the index tree, and when the obtained spatial-temporal hybrid codes of the trajectory are different, the server may add these spatial-temporal hybrid codes to the index tree as nodes of the preset index level.

In addition, the server further stores a trajectory identifier and trajectory metadata of the trajectory together in a storage space corresponding to the node at the preset index level. Specifically, the server stores the trajectory identifier and the trajectory metadata of the trajectory in all nodes corresponding to the spatial-temporal hybrid codes of the trajectory, that is, the trajectory identifier and the trajectory metadata of the trajectory are stored in each node that belongs to the spatial-temporal hybrid codes of a same trajectory. In this application, the trajectory identifier and the trajectory metadata of the trajectory may be collectively referred to as trajectory information. The trajectory information stored in the node corresponding to the spatial-temporal hybrid code may be said to be the trajectory information mapped to the spatial-temporal hybrid code.

The trajectory identifier is used to uniquely identify a trajectory in the index database. For example, for a trajectory of a vehicle, the trajectory identifier may be a license plate number.

The trajectory metadata includes a trajectory length. The trajectory length is a quantity of continuously adjacent spatial-temporal grids mapped to trajectory points of a trajectory in the spatial-temporal grid model in step S 1003. That is, the trajectory length is a total quantity of new trajectory points of a trajectory that are obtained based on the interpolation method in step S1003 and the original trajectory points of the trajectory. That is, the trajectory length is a quantity of spatial-temporal hybrid codes of the trajectory in the code set of the trajectory obtained in step S1003.

In a possible implementation, the trajectory metadata further includes other information, for example, information such as a quantity of levels of spatial-temporal grids mapped to spatial-temporal hybrid codes, a minimum bounding box, and a duration of the trajectory. The information may be stored together with the trajectory identifier and the trajectory length in a corresponding spatial-temporal hybrid encoding node. The minimum bounding box refers to spatial position information mapped to the spatial-temporal grid mapped to the spatial-temporal hybrid code. For example, the minimum bounding box may be longitude and latitude information of the upper left corner and longitude and latitude information of the lower right corner of the spatial position mapped to the spatial-temporal grid.

When the obtained spatial-temporal hybrid codes of the trajectory have the same codes, for the same spatial-temporal hybrid codes, only one spatial-temporal hybrid code is added to the index tree as a node of the preset index level. However, the server stores all trajectory identifiers and trajectory metadata of a plurality of trajectories to which the same spatial-temporal hybrid code belongs in the node of the spatial-temporal hybrid code. For example, there is a same spatial-temporal hybrid code in the code set of the first trajectory and the code set of the second trajectory, and the server adds the same spatial-temporal hybrid code to the index tree as a node at a preset index level, and stores the trajectory identifiers and trajectory metadata of the first trajectory and the second trajectory in the node.

After the foregoing operations, the server has constructed a plurality of nodes of the index tree at the preset index level. In addition, based on the foregoing description, it can be learned that the spatial code part of spatial-temporal hybrid code has an attribute that a higher-level spatial code prefix includes a corresponding lower-level spatial code; and the temporal code part of spatial-temporal hybrid code has an attribute that a higher-level temporal code prefix includes a corresponding lower-level temporal code. In this case, the spatial-temporal hybrid code of a node of each level lower than the preset index level in the index tree may be constructed based on the spatial-temporal hybrid code of the node at the preset index level in the index tree.

Specifically, first, the spatial-temporal hybrid code of a node at one level lower than the preset index level is constructed; and the server may determine, based on a quantity of spatial code digits and a quantity of temporal code digits that are of the spatial-temporal hybrid code mapped to the spatial-temporal grid level of one level lower than the preset index level in the index tree, a quantity of digits of a spatial code prefix (assuming that the spatial code prefix is w1 digits, and w1 is an integer) and the quantity of digits of the temporal code prefix (assuming that the temporal code prefix is w2 digits, and w2 is an integer) of the spatial-temporal hybrid code at the preset index level, respectively.

Then, the server may query, in the spatial code part of the spatial-temporal hybrid code at the preset index level, whether a code with the same first w1 digits exists, and query, in the temporal code part of the spatial-temporal hybrid code at the preset index level, whether a code with the same first w2 digits exists; and if both exist, the spatial code with the same first w1 digits and the temporal code with the same first w2 digits are combined in the foregoing manner of combining the spatial code and the temporal code to obtain a new spatial-temporal hybrid code. The manner of combining the spatial code and the temporal code herein is the same as the combination manner of the spatial-temporal hybrid code at the preset index level, that is, encoding rules of the spatial-temporal hybrid code need to be consistent. The server adds the new spatial-temporal hybrid code to the index tree as a node at one level lower than the preset index level. The node is a parent node of a spatial-temporal hybrid code with the same first w1 spatial code digits and the same first w2 temporal code digits in the spatial-temporal hybrid codes of the preset index level.

If the first w1 digits of a temporal code and the first w2 digits of a spatial code in one spatial-temporal hybrid code in the spatial-temporal hybrid codes of the preset index level are different from those of all other spatial-temporal hybrid codes of the preset index level, the server may construct an independent parent node in the index tree for the spatial-temporal hybrid code. For a method for constructing the parent node, refer to the description in the previous paragraph. Details are not described herein again.

After the server establishes parent nodes for all the spatial-temporal hybrid codes of the preset index level, these parent nodes form a plurality of nodes at one level lower than the preset index level in the index tree. If the index level that is one level lower than the preset index level is not the lowest level, that is, the first level, in the index tree, the server continues to construct nodes at two levels lower than the preset index level.

Specifically, the spatial-temporal hybrid codes of the nodes at two levels lower than the preset index level are constructed based on the foregoing constructed spatial-temporal hybrid codes of a plurality of nodes at one level lower than the preset index level. Similarly, the server may determine, based on a quantity of spatial code digits and a quantity of temporal code digits that are of the spatial-temporal hybrid code mapped to the spatial-temporal grid level at two levels lower than the preset index level in the index tree, a quantity of digits of a spatial code prefix (assuming that the spatial code prefix is w3 digits, and w3 is an integer) and the quantity of digits of the temporal code prefix (assuming that the temporal code prefix is w4 digits, and w4 is an integer) of the spatial-temporal hybrid code at the preset index level, respectively.

Then, the server may query, in the spatial code parts of the spatial-temporal hybrid codes of a plurality of nodes at one level lower than the preset index level, whether a code with the same first w3 digits exists, and query, in the temporal code parts, whether a code with the same first w4 digits exists; and if both exist, the spatial code with the same first w3 digits and the temporal code with the same first w4 digits are combined in the foregoing manner of combining the spatial code and the temporal code to obtain a new spatial-temporal hybrid code. The manner of combining the spatial code and the temporal code herein is the same as the combination manner of the spatial-temporal hybrid code at the preset index level, that is, encoding rules of the spatial-temporal hybrid code need to be consistent. The server adds the new spatial-temporal hybrid code to the index tree as a node at two levels lower than the preset index level. The node is a parent node of a spatial-temporal hybrid code with the same first w1 spatial code digits and the same first w2 temporal code digits in the spatial-temporal hybrid codes of one level lower than the preset index level.

Similarly, if the first w3 digits of a temporal code and the first w4 digits of a spatial code in one spatial-temporal hybrid code in the spatial-temporal hybrid codes of one level lower than the preset index level are different from those of all other spatial-temporal hybrid codes of one level lower than the preset index level, the server may construct an independent parent node in the index tree for the spatial-temporal hybrid code. For a method for constructing the parent node, refer to the description in the previous paragraph. Details are not described herein again.

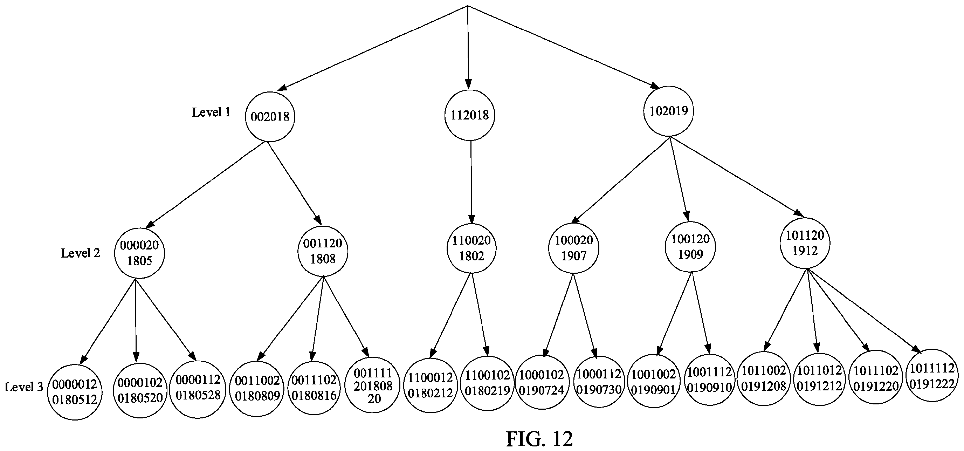

The server may construct the nodes level by level according to the foregoing method for constructing the nodes at the lower levels in the index tree, until the nodes at the lowest level in the index tree, that is, the first level, are obtained through construction, thereby completing the preliminary construction of the index tree. For example, refer to FIG. 12. FIG. 12 is a schematic diagram of an example of a structure of a constructed preliminary index tree. In FIG. 12, it is assumed that the index tree includes three levels. The third level is the preset index level; the second level is the index level that is one level lower than the preset index level; and the first level is the index level that is two levels lower than the preset index level, that is, the lowest level in the index tree.

The foregoing constructed index tree is only a preliminary index tree. The server periodically obtains data of more trajectories, performs spatial-temporal encoding on more trajectories, and adds these newly obtained spatial-temporal hybrid codes of the trajectories to the index tree.

For example, the following describes a process of adding a newly obtained spatial-temporal hybrid code of a trajectory to the index tree.

One code in the newly obtained spatial-temporal hybrid codes of the trajectory is used as an example for description, and the code may be referred to as a first spatial-temporal hybrid code. The server may compare the prefix of the spatial code of the first spatial-temporal hybrid code level by level with the spatial code of the spatial-temporal hybrid code of each level in the index tree, and compare the prefix of the temporal code of the first spatial-temporal hybrid code level by level with the temporal code of the spatial-temporal hybrid code of each level in the index tree.

It is assumed that the index tree includes an L level and an H level, and the H level in the index tree is one level higher than the L level; and the spatial code prefix of the first spatial-temporal hybrid code includes a spatial code of a spatial-temporal hybrid code of the L level, and the temporal code prefix of the first spatial-temporal hybrid code also includes the temporal code of the temporal-spatial hybrid code of the L level, but none of the spatial codes (or temporal codes) of all the spatial-temporal hybrid codes at the H level is included in the prefix of the spatial code (or temporal code) of the first spatial-temporal hybrid code. In this case, the server adds the first spatial-temporal hybrid code to the H level as a node at the H level, and configures the spatial-temporal hybrid code of the L level as a parent node of the first temporal-spatial hybrid encoding node. In addition, the server stores the trajectory identifier and trajectory metadata of the trajectory to which the first spatial-temporal hybrid code belongs in a storage space corresponding to the first temporal-spatial hybrid encoding node.

If none of the spatial codes (or temporal codes) of the spatial-temporal hybrid codes at all levels in the index tree is included in the prefix of the spatial code (or temporal code) of the first spatial-temporal hybrid code, the server adds the first spatial-temporal hybrid code to the highest level in the index tree as a node at the highest level, and then constructs, based on the first spatial-temporal hybrid code, each lower-level index encoding node corresponding to the code. For a specific method for constructing the lower-level node, refer to the foregoing description. Details are not described herein again. In addition, the server stores the trajectory identifier and trajectory metadata of the trajectory to which the first spatial-temporal hybrid code belongs in a storage space corresponding to the first temporal-spatial hybrid encoding node.

If a spatial-temporal hybrid code in the index tree is the same as the first spatial-temporal hybrid code, the server directly stores the trajectory identifier and trajectory metadata of the trajectory to which the first spatial-temporal hybrid code belongs in a storage space corresponding to the spatial-temporal hybrid encoding node.

In conclusion, the server may gradually improve the index database by using the method described above.

In a possible implementation, the server may further store the attribute information of the trajectory together in a storage space corresponding to the corresponding spatial-temporal hybrid encoding node. Related description of the attribute information of the trajectory is provided in S1001, and details are not described herein again.

In a specific embodiment, the server may directly store the attribute information of the trajectory in a storage space corresponding to each spatial-temporal hybrid encoding node of the trajectory in the index tree.

Alternatively, the server may first encode the attribute information of the trajectory, and then store the code of the attribute information in a storage space corresponding to each spatial-temporal hybrid encoding node of the trajectory in the index tree. For example, the server may also segment a numeric value range of the attribute, and may assign a code to each segment. If the attribute information cannot be represented by a numeric value, the attribute information may be classified, and each category may be assigned a code, so as to implement encoding of the attribute information. For example, it is assumed that the attribute information includes a color of a vehicle and a quantity of passengers that can be carried. For the attribute of the vehicle color, each color may be represented by using a code. For example, white is coded as 00, and red is coded as 01. The quantity of passengers that can be carried may be divided into ranges, and each range is represented by a code. For example, the quantity of passengers that can be carried within the range of 1 to 4 may be coded as 10, and the quantity of passengers that can be carried within the range of 5 to 10 may be coded as 11. This is merely an example. A specific range, classification, and code are determined according to an actual situation, and are not limited in this solution.

S1005: The server constructs a trajectory database based on the trajectory data obtained in S1001.

In this embodiment of this application, the trajectory database is used to store trajectory data of each trajectory that is obtained by the server. When the trajectory database is constructed, an identifier of a trajectory may be used as an index of the corresponding trajectory data. That is, identifiers of the plurality of traj ectories included in the index database are in a one-to-one correspondence with trajectory data of the plurality of trajectories in the trajectory database.

In a possible implementation, the server may alternatively store the spatial-temporal hybrid code of the trajectory in the trajectory database.

In addition, to resolve the storage consistency problem of variable-length trajectories (data lengths of different trajectories vary greatly), a trajectory segment storage mode may be adopted, where the trajectory is segmented in a temporal-spatial range corresponding to the spatial-temporal grid, and a trajectory identifier and segment identifier are stored. Segment metadata information of the trajectory may be further stored. The segment metadata of the trajectory includes but is not limited to attributes such as a time range of a trajectory segment, a spatial-temporal grid to which the trajectory segment belongs, and a length of the trajectory segment.

In this embodiment of this application, the index database may be stored in a high-speed storage medium, for example, a storage medium such as a memory or a solid-state drive (solid-state disk or solid-state drive, SSD). A solid-state drive is also referred to as a solid-state disk. This is to facilitate quick query of similar trajectories in the process of querying a similar trajectory, so as to improve the query efficiency. The trajectory database may be in a low-speed storage medium, such as a mechanical disk.

**Embodiment 2**

The following first describes another data processing method for constructing and updating a database according to an embodiment of this application.

In a possible implementation, attribute information of a trajectory may be further encoded to obtain an attribute code, and then the attribute code is combined into a foregoing spatial-temporal hybrid code to obtain a multi-dimensional hybrid code. For encoding of the attribute information of the trajectory, refer to the related description of encoding of the attribute information in step S1004. Details are not described herein again.

If the attribute information includes a plurality of pieces of information, the plurality of pieces of information may be separately encoded to obtain a plurality of codes, and then the plurality of codes are combined according to a preset sequence to form an encoding sequence. The encoding sequence is the attribute code of the trajectory. For example, it is assumed that the attribute information of the trajectory includes two pieces of information: a vehicle color and a quantity of passengers that can be carried, and the vehicle color is white, and the quantity of passengers that can be carried is 4; then it is assumed that a code of the white color of the vehicle according to a preset encoding rule is 00, and the quantity 4 of passengers, which falls within the range of 1 to 4, can be coded as 10; and then it is assumed that the attribute of the code of the vehicle color is arranged before the attribute of the code of the quantity of passengers that can be carried. Therefore, the encoding sequence 0010 can be obtained, and the encoding sequence is the attribute code of the trajectory.

After obtaining the spatial-temporal hybrid code of each trajectory point and the attribute code of the trajectory by using the method described above, the server may combine the attribute code of the trajectory into the spatial-temporal hybrid code of each trajectory point, so as to obtain the multi-dimensional hybrid code of each trajectory point. For example, the attribute code of the trajectory may be directly concatenated into the spatial-temporal hybrid code of each trajectory point of the trajectory as a suffix or prefix of the spatial-temporal hybrid code. For example, it is assumed that the spatial-temporal hybrid code is 11002018, and the attribute code is 0010. In this case, the attribute code may be concatenated after the spatial-temporal hybrid code as a suffix, and the obtained multi-dimensional hybrid code is 110020180010. Alternatively, the attribute code may be concatenated before the spatial-temporal hybrid code as a prefix, and the obtained multi-dimensional hybrid code is 001011002018. Certainly, only an example of a manner of combining the spatial-temporal hybrid code and the attribute code is provided herein. The spatial-temporal hybrid code and the attribute code may also be combined in another manner, which is not limited in this solution.

In this application, multi-dimensional hybrid codes may also be one-to-one mapped to the spatial-temporal grids in the foregoing spatial-temporal grid model. In a possible implementation, a spatial-temporal grid to which the multi-dimensional hybrid code is mapped and a spatial-temporal grid to which the spatial-temporal hybrid code in the multi-dimensional hybrid code is mapped are the same grid, so that the multi-dimensional hybrid codes may be one-to-one mapped to the spatial-temporal grids of the spatial-temporal grid model.

After obtaining the multi-dimensional hybrid code of each trajectory, the server constructs the index database and the trajectory database based on the multi-dimensional hybrid codes. For a specific construction method, refer to corresponding descriptions in S1004 and S1005. Details are not described herein again. It should be noted that the attribute information of the trajectory may not be added to the index database constructed in Embodiment 2.

**Embodiment 3**

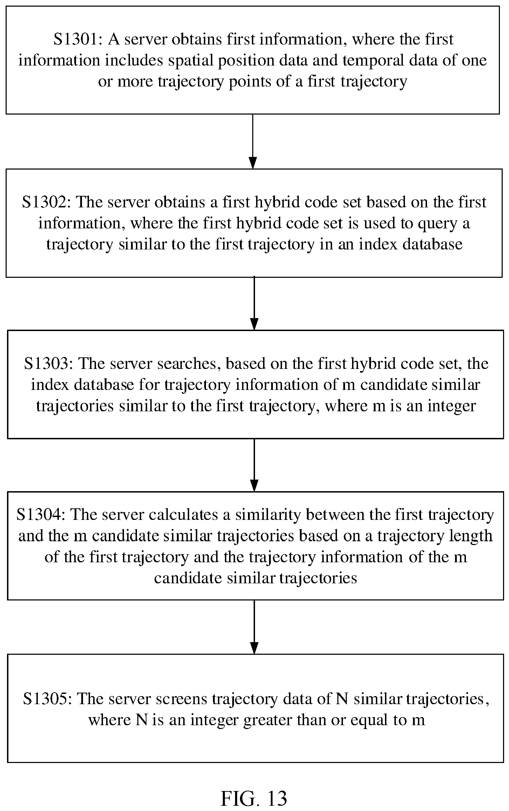

A similar trajectory can be queried based on the index database constructed above. The following describes a data processing method for querying a similar trajectory. Refer to FIG. 13. The method may include but is not limited to the following steps.

S1301: A server obtains first information, where the first information includes spatial position data and temporal data of one or more trajectory points of a first trajectory.

In a specific embodiment, the first information may be sent by a user terminal to the server, or may be information input by the user that is obtained by the server by using a user interface (user interface, UI) displayed by a device of the server. The foregoing first trajectory may be any trajectory for which a similar trajectory needs to be queried. The spatial position data of the trajectory point may include longitude information and latitude information of the trajectory point, and the temporal data of the trajectory point includes temporal information when the object generating the first trajectory is at the spatial position of the trajectory point.

For example, in a hitchhiking service scenario, the foregoing first trajectory may be a trip entered by the user on the user terminal such as a mobile phone or a smartwatch, and then the server uses the trip as the first trajectory to search for a vehicle that can currently carry a passenger and whose trip is similar to the first trajectory. The trip may include a departure position, a destination position, a departure time, and the like. In this case, the departure position and the destination position are two trajectory points of the trajectory. In a companion analysis scenario, the first trajectory may be a trajectory of a specific user in a time period, and may be obtained by querying a corresponding database. Then, the server uses the trajectory as the first trajectory to query users who are companions (that is, with a similar trajectory) of the user in the same time period.

The foregoing server may be, for example, the server 100 shown in FIG. 1, and the foregoing user terminal may be, for example, the user terminal 110 shown in FIG. 1.

In a possible implementation, the first information may further include attribute data associated with the first trajectory, and the attribute data is the attribute information of the trajectory described above. Details are not described herein again.

S1302: The server obtains a first hybrid code set based on the first information, where the first hybrid code set is used to query a trajectory similar to the first trajectory in an index database.

The index database is the index tree described in Embodiment 1 and Embodiment 2.

In a possible implementation, the first hybrid code set includes a spatial-temporal hybrid code of each trajectory point in the first information at a preset level in the index database. For related description of the spatial-temporal hybrid code, refer to Embodiment 1. In another possible implementation, when the first information further includes attribute data associated with the first trajectory, the first hybrid code set includes a multi-dimensional hybrid code of each trajectory point of the first trajectory at a preset level in the index database. For related description of the multi-dimensional hybrid code, refer to Embodiment 2. The following describes two cases.

In the first case, the first hybrid code set includes a spatial-temporal hybrid code of each trajectory point in the first information at a preset level in the index database. This case may be implemented based on the index database constructed in Embodiment 1.

In a specific embodiment, the server may perform encoding based on the spatial position data and the temporal data of the one or more trajectory points of the first trajectory to obtain the spatial-temporal hybrid codes of the one or more trajectory points. Specifically, the server may first determine the spatial-temporal grid level of the code. Because there is a mapping between the spatial-temporal grid level and the index database, that is, the index tree level, after the spatial-temporal grid level is determined, the index tree level is also determined accordingly. It is assumed that the determined index tree level is the foregoing preset level, and the preset level may be any level in the index tree. Then, spatial encoding and time encoding are separately performed on each trajectory point of the first trajectory, and a spatial code and a temporal code of each trajectory point are combined to obtain a spatial-temporal hybrid code of the trajectory point. For a specific encoding process, refer to the description in S1002 in Embodiment 1. Details are not described herein again.

In the second case, the first hybrid code set includes the multi-dimensional hybrid code of each trajectory point in the first information at a preset level in the index database. This case may be implemented based on the index database constructed in Embodiment 2.

It can be learned from the description of Embodiment 2 that the multi-dimensional hybrid code is obtained by combining the spatial-temporal encode, the spatial code, and the attribute code of the trajectory point. For a specific encoding process of the multi-dimensional hybrid code, refer to the description in Embodiment 2. Details are not described herein again.

S1303: The server searches, based on the first hybrid code set, the index database for trajectory information of m candidate similar trajectories similar to the first trajectory, where m is an integer.

In a specific embodiment, after the server obtains the first hybrid code set of the first trajectory, the server may search the index database for a code that is the same as the code in the first hybrid code set. The found hybrid codes are mapped to the trajectory information. In this case, the plurality of found hybrid codes to which the trajectory information is mapped may be referred to as a second hybrid code set.

The following describes a specific query process by using a code in the first hybrid code set as an example. It is assumed that the code is referred to as a first code.

Based on the foregoing description, it can be learned that, for both the spatial-temporal hybrid code and the multi-dimensional hybrid code, the prefix of the spatial code in the higher-level hybrid code in the index tree includes a corresponding lower-level spatial code, and the prefix of the temporal code in the higher-level hybrid code includes a corresponding lower-level temporal code. In the following, the spatial-temporal hybrid code and the multi-dimensional hybrid code are collectively referred to as a hybrid code. In this case, the server may find, starting from the hybrid code at the lowest level in the index tree, that is, the first level, the hybrid code whose spatial prefix and temporal prefix are the same as those of the first code, then continue to query, at the second level and by using the hybrid code as a parent code, the hybrid code whose spatial prefix and temporal prefix are the same as those of the first code, and then continue to perform query level by level until a code that is exactly the same as the first code is found.

For ease of understanding, refer to FIG. 12. It is assumed that the first code 00000120180512, that is, 00. In this case, the server may compare the spatial code of the first-level code, that is, the first two digits of the first-level code, with the first two digits of the spatial code of the first code 00000120180512, and compare the temporal code of the first-level code, that is, the last four digits of the first-level code, with the first four digits of the temporal code of the first code 00000120180512, that is, 2018, to determine that 002018 is a matching first-level hybrid code. Then, in the second-level hybrid codes that use 002018 as a parent node, that is, 0000201805 and 0011201808, the server may compare the spatial codes of the two codes, that is, the first four digits of the two codes, with the first four digits of the spatial code of the first code 00000120180512, that is, 0000, and compare the temporal codes of the two codes, that is, the last six digits of the temporal codes of the two codes, with the first six digits of the temporal code of the first code 00000120180512, that is, 201805, to determine that 0000201805 is a matching second-level hybrid code. Then, in the third-level hybrid codes that use 0000201805 as a parent node, that is, 00000120180512, 00001020180520, and 00001120180528, the server may compare the spatial codes of the three codes, that is, the first six digits of the three codes, with the first six digits of the spatial code of the first code 00000120180512, that is, 000012, and compare the temporal codes of the three codes, that is, the last eight digits of the three codes, with the first eight digits of the temporal code of the first code 00000120180512, that is, 20180512, to finally find the first code 00000120180512.

Alternatively, the server may obtain, according to the encoding rule of a hybrid code of each level in the index tree and based on the first code, a lower-level hybrid code corresponding to the first code, and then perform query and comparison level by level based on the obtained lower-level hybrid code. Finally, a candidate hybrid code of a level corresponding to the first code is found, and then the first code is compared with the candidate hybrid code until a code that is exactly the same as the first code is found.

For ease of understanding, refer to FIG. 12. It is assumed that the first code is 00000120180512. In this case, the lower-level hybrid code corresponding to the first code may be obtained based on the first code, that is, the obtained second-level code is 0000201805, and the obtained first-level code is 002018. Then, the server may find 002018 at the first level, find 0000201805 in the two second-level codes corresponding to 002018, that is, 0000201805 and 0011201808, and then find 00000120180512 in the third-level codes corresponding to 0000201805, that is, 00000120180512, 00001020180520, and 00001120180528 through comparison.

If no code that is exactly the same as the first code is found after the comparison, it indicates that the first code does not exist in the index tree.

Each code in the first hybrid code set is queried in the index tree in the foregoing manner, and if a same code can be found in the index tree, all stored trajectory identifiers and trajectory lengths are read from the storage space of the nodes with the same code. After the trajectory identifiers and trajectory lengths stored in all nodes with the same code are read, the server may distinguish all the trajectories by using the trajectory identifiers, and these trajectories are candidate similar trajectories.

In another possible implementation, not all the trajectory information of the candidate similar trajectories is stored in the storage spaces corresponding to the nodes whose codes are the same as those in the first hybrid code set and that are in the index tree, and a part of the trajectory information may also be stored in the storage spaces of lower-level and/or higher-level codes corresponding to these same codes.

Based on the description of the foregoing embodiment, it can be learned that, a trajectory point in a trajectory with a relatively high speed and a relatively wide moving range may be encoded according to a lower-level spatial-temporal grid encoding rule, and be mapped to a lower-level node in the index tree. However, a trajectory point in a trajectory with a relatively low speed and a relatively narrow moving range may be encoded according to a higher-level spatial-temporal grid encoding rule, and be mapped to a higher-level node in the index tree. In this case, the server may use, as candidate similar trajectories, trajectories corresponding to trajectory identifiers stored in the storage spaces of the lower-level and/or higher-level nodes corresponding to codes that are the same as those in the first hybrid code set in the index tree.

For example, for a lower level, it is assumed that a code at a fifth level in the index tree is the same as a code in the first hybrid code set, and the storage space of a parent node of an encoding node at the fifth level stores information such as a trajectory identifier and a trajectory length. In this case, the server may determine a trajectory corresponding to the trajectory identifier stored in the storage space of the parent node as a candidate similar trajectory. If the storage space of the parent node still stores the trajectory identifier and the trajectory length, the parent node may also be determined as a candidate similar trajectory.

For another example, for a higher level, it is assumed that a code at a fifth level in the index tree is the same as a code in the first hybrid code set, and the storage space of a child node, that is, a node at a corresponding next level, of an encoding node at the fifth level stores information such as a trajectory identifier and a trajectory length. In this case, the server may determine a trajectory corresponding to the trajectory identifier stored in the storage space of the child node as a candidate similar trajectory. If the storage space of the child node still stores the trajectory identifier and the trajectory length, the child node may also be determined as a candidate similar trajectory.

In a possible implementation, for the first case in S 1302, a code in the first hybrid code set is a spatial-temporal hybrid code, and does not include attribute information of the first trajectory, while the first information further includes the attribute information of the first trajectory, and candidate similar trajectories that match the attribute information needs to be screened based on the attribute information. In this case, the server may perform screening again on the plurality of found trajectories based on the attribute information of the first trajectory.

Specifically, if the attribute information of the trajectory is directly stored in the storage space corresponding to the node of the hybrid code in the index database, the server may directly compare the attribute information of the first trajectory with the attribute information of the plurality of found trajectories. If the attribute information of the first trajectory is the same as the attribute information of a trajectory or falls within a range included in the attribute information of the trajectory, it may be determined that the trajectory is a candidate similar trajectory.

If the code of the attribute information of the trajectory is stored in the storage space corresponding to the node of a hybrid code in the index database, the server needs to first encode the attribute information of the first trajectory. For a specific encoding process, refer to the specific description in S 1004 in Embodiment 1. Details are not described herein again. Then, the code of the attribute information of the first trajectory is compared with the codes of the attribute information of the plurality of found trajectories. If the code of the attribute information of the first trajectory is the same as the code of the attribute information of a trajectory, the trajectory may be determined as a candidate similar trajectory.

If the index database does not store the attribute information of a trajectory in the plurality of found trajectories, the server may determine the trajectory as a candidate similar trajectory, or the server may determine that the trajectory is not a candidate similar trajectory.

By using the foregoing method, the server may screen the m candidate similar trajectories, and may obtain the trajectory information of the candidate similar trajectories from the storage space of the corresponding encoding node.

S1304: The server calculates a similarity between the first trajectory and the m candidate similar trajectories based on a trajectory length of the first trajectory and the trajectory information of the m candidate similar trajectories.

After obtaining the candidate similar trajectories, the server calculates the similarity between the first trajectory and the candidate similar trajectories based on the identifiers and the trajectory lengths of all the candidate similar trajectories and the trajectory length of the first trajectory. The following describes a similarity calculation process by using one of the candidate similar trajectories (which may be referred to as a first candidate trajectory) as an example.

Specifically, the server may calculate a quantity of occurrences of the trajectory identifier of the first candidate trajectory in the foregoing read trajectory identifiers, that is, calculate the quantity of occurrences of the trajectory identifier of the first candidate trajectory in all the read trajectory identifiers. That is, the server may calculate a quantity of hybrid codes to which the trajectory identifier of the first candidate trajectory is mapped in the obtained second hybrid code set. Because each read trajectory identifier is corresponding to one hybrid code, and each hybrid code is corresponding to one trajectory point, the quantity of occurrences of the trajectory identifier of the first candidate trajectory is a quantity of the same hybrid codes in the first candidate trajectory and the first trajectory, and is also a quantity of the same trajectory points in the first candidate trajectory and the first trajectory. Then, according to actual requirements in different scenarios, the server calculates the similarity between the two trajectories based on the quantity of the same hybrid codes, the trajectory length of the first candidate trajectory, and the trajectory length of the first trajectory.

Before the similarity calculation is described, a corresponding calculation amount is defined.

It is assumed that the first hybrid code set of the first trajectory is represented by $C_A$. In addition, it is assumed that the trajectory length of the read first candidate trajectory is $|C_B|$, and $C_B$ represents the code set of the first candidate trajectory. A quantity of the same hybrid codes in the hybrid codes of the first candidate trajectory and the hybrid codes of the first trajectory is $|C_A \cap C_B|$. The following describes trajectory similarity calculation in several scenarios as an example.

The first scenario is a common application scenario that does not include features requiring special attention.

In this scenario, the similarity between the first candidate trajectory and the first trajectory may be calculated by using the following formula:

$$\text{GSIM} = \frac{|C_A \cap C_B|}{|C_A| + K \times |C_B| - |C_A \cap C_B|}$$

In this formula, GSIM indicates the similarity, and K is greater than 0. Here, the coefficient K is added to consider a case in which similarity calculation is performed between trajectories corresponding to the hybrid codes at different levels. When K is equal to 1, it indicates that the hybrid code of the first trajectory and the hybrid code of the first candidate trajectory are hybrid codes at a same level in the index tree. When K is greater than 1, it indicates that the level of the hybrid code of the first candidate trajectory in the index tree is lower than the level of the hybrid code of the first trajectory in the index tree. When K is greater than 0 and less than 1, it indicates that the level of the hybrid code of the first candidate trajectory in the index tree is higher than the level of the hybrid code of the first trajectory in the index tree. The case in which K is greater than 1 and the case in which K is greater than 0 and less than 1 are corresponding to the case described in S1303 in which "the server may use, as candidate similar trajectories, trajectories corresponding to trajectory identifiers stored in the storage spaces of the lower-level and/or higher-level nodes corresponding to codes that are the same as those in the first hybrid code set in the index tree".

Optionally, K may be $2^q$, where q is an integer. q represents a difference between the level of the hybrid code of the first candidate trajectory in the index tree and the level of the hybrid code of the first trajectory in the index tree. When q is a negative integer, it is corresponding to the case in which K is greater than 0 and less than 1. When q is 0, it is corresponding to the case in which K is equal to 1. When q is a positive integer, it is corresponding to the case in which K is greater than 1. K can be used to balance the impact of inconsistency between the quantity of spatial-temporal grids mapped to trajectories at different levels and an actual path length.

The second scenario is a scenario that focuses on features associated with trajectories, for example, a hitchhiking or crime tracking scenario.

In this scenario, the similarity between the first candidate trajectory and the first trajectory may be calculated by using the following formula:

$$\text{GSIM} = \frac{|C_A \cap C_B| \times 2}{|C_A| + K \times |C_B|}$$

The calculation can improve accuracy of similarity calculation between the two trajectories in the second scenario.

The third scenario is a scenario that focuses on the similarity with a source trajectory, such as epidemic analysis and tracking.

In this scenario, the similarity between the first candidate trajectory and the first trajectory may be calculated by using the following formula:

$$GSIM = \frac{|C_A \cap C_B|}{|C_A|}$$

Similarity calculation formulas in this embodiment of this application are not limited to the foregoing formulas. A specific calculation formula is determined based on an actual situation. This is not limited in this solution.

S1305: The server screens trajectory data of N similar trajectories, where N is an integer greater than or equal to m.

Based on the foregoing description, after calculating the similarity between each candidate similar trajectory and the first trajectory according to the corresponding scenario, the server may sort the similarities in descending order, and screen N candidate similar trajectories corresponding to the first N similarities. The N candidate similar trajectories are N similar trajectories that are finally found. To facilitate understanding of the correspondence between the similarity and the candidate trajectory, for example, assuming that the similarity between the first candidate trajectory and the first trajectory is the first similarity, in this case, the candidate trajectory corresponding to the first similarity is the first candidate trajectory.

In another possible implementation, the server may alternatively screen the N similar trajectories according to a preset threshold. For example, assuming that the preset threshold of the similarity is 0.6, in this case, provided that the calculated similarity between the two trajectories is greater than or equal to 0.6, the candidate trajectory corresponding to the similarity is a trajectory similar to the first trajectory.

The manner of screening similar trajectories is merely described herein as an example, and a specific screening manner is not limited in this solution.

After the server screens the N similar trajectories, if the first information is from the user terminal, the server may send trajectory data of the N similar trajectories, for example, trajectory identifiers and trajectory attribute information, to the user terminal. If the first information is from a UI interface of a device of the server, the server may display the trajectory data of the N similar trajectories on a display interface of the device of the server.

In addition, it should be noted that N may be specified by a user. For example, a specific value of N may be sent or input to the server together with the first information. Alternatively, a specific value of N may be obtained by the user terminal from an instruction entered by the user and sent to the server, or may be obtained by the server from an instruction entered by the user, or the like.

**Embodiment 4**

In another possible implementation, to ensure robustness of a trajectory similarity query algorithm and avoid missing potential similar trajectories, the first hybrid code set of the first trajectory in Embodiment 3 is a set formed by hybrid codes obtained after the first trajectory is extended.

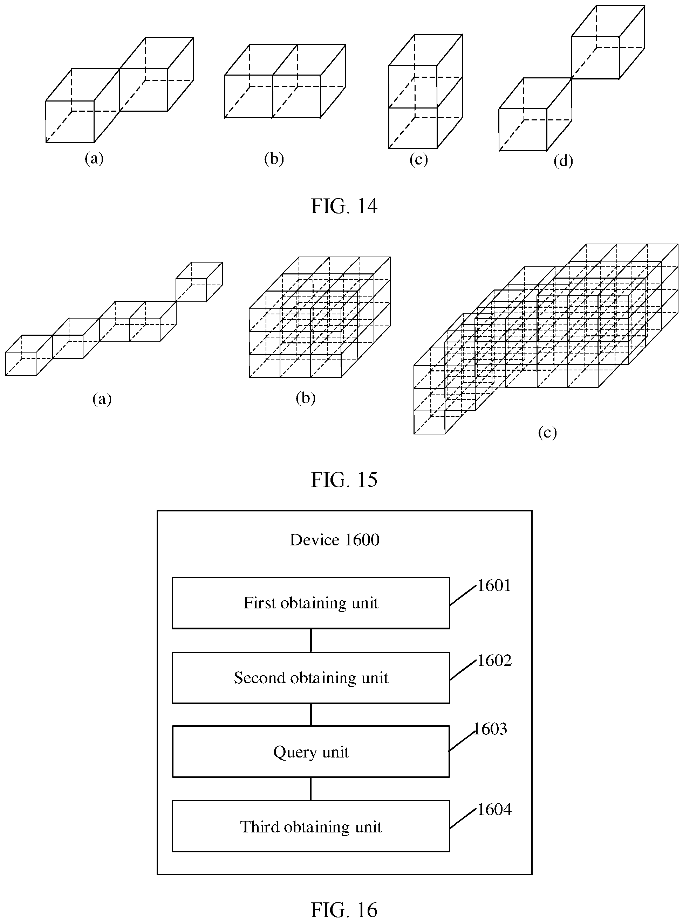

In a specific embodiment, the server may extend the first trajectory according to a preset trajectory extension rule. For example, the preset trajectory extension rule may be as follows: In a spatial-temporal grid model, all hybrid codes corresponding to a spatial-temporal grid that is directly adjacent to the spatial-temporal grid mapped to the first trajectory hybrid code are all hybrid codes extended based on the first trajectory. In this case, the extended hybrid codes of the first trajectory and the hybrid code before extension form the first hybrid code set. Being directly adjacent means that there is a common boundary or vertex contact between the two grids. For example, refer to FIG. 14. (a), (b), (c), and (d) in FIG. 14 show several schematic diagrams in which the two grids are directly adjacent.

Alternatively, for example, the preset trajectory extension rule may be extending the first trajectory based on a preset temporal-spatial structure. The preset temporal-spatial structure represents a series of spatial-temporal grid sets that are adjacent to each other. A shape of the preset temporal-spatial structure is determined according to different application scenarios, and is usually a grid cube formed by a plurality of spatial-temporal grids. The grid structure in the preset temporal-spatial structure is represented as an offset of each grid in the structure relative to a central grid of the structure. For example, refer to the structure shown in (b) in FIG. 15. The extension of the first trajectory in this embodiment may use a preset temporal-spatial structure with a structure size of a 3 x 3 x 3 spatial-temporal grid. The spatial level and the temporal division granularity of the grid of the preset temporal-spatial structure in the spatial-temporal grid model need to be the same as the spatial level and the temporal division granularity corresponding to the hybrid code of the first trajectory. That is, the spatial-temporal grid level to which the grid of the preset temporal-spatial structure belongs is the same as the level of the temporal-spatial grid mapped to the hybrid code of the first trajectory.

In a specific embodiment, first, the server may obtain, through encoding and interpolation based on the first information of the first trajectory, continuously adjacent spatial-temporal grids mapped to the first trajectory. For example, refer to (a) in FIG. 15. It is assumed that (a) in FIG. 15 shows continuous adjacent spatial-temporal grids mapped to the hybrid code of the first trajectory. It is assumed that the structure shown in (b) in FIG. 15 is the preset temporal-spatial structure. Then, the server may traverse the spatial-temporal grids of (a) in FIG. 15 by using the structure shown in (b) in FIG. 15. Specifically, the traversal operation includes: separately overlapping a central grid of the preset temporal-spatial structure with a spatial-temporal grid of (a) in FIG. 15, and then using a spatial-temporal grid that is in the preset temporal-spatial structure and does not overlap with the spatial-temporal grid of (a) in FIG. 15 as an extended spatial-temporal grid. Finally, for a grid structure obtained by extending the spatial-temporal grid of the first trajectory, refer to a structure shown in (c) in FIG. 15.

In this case, the hybrid codes corresponding to the spatial-temporal grids included in the structure shown in (c) in FIG. 15 are the extended codes of the first trajectory, that is, the hybrid codes corresponding to the spatial-temporal grids included in the structure shown in (c) in FIG. 15 form the first hybrid code set. It may be learned that, in FIG. 15 (a), a quantity of spatial-temporal grids mapped to a trajectory is 5, and after extension, the quantity of spatial-temporal grids mapped to the trajectory may be extended to 69, as shown in FIG. 15 (c). That is, the quantity of hybrid codes included in the hybrid code set of the trajectory is expanded from 5 to 69.

Because each hybrid code may be considered as corresponding to one trajectory point, the extension of the quantity of hybrid codes of the first trajectory may also be said to be the extension of the quantity of trajectory points on the first trajectory.

After the first hybrid code set of the first trajectory is obtained based on the foregoing method in Embodiment 4, similarly, the server may query candidate similar trajectories based on the first hybrid code set. For a specific query process, refer to the corresponding description of S1303 in Embodiment 3. Details are not described herein again.

After the candidate similar trajectories are found, the similarities between the candidate similar trajectories and the first trajectory are calculated. The following describes a trajectory similarity calculation process of based on the code set of the extended first trajectory. Similarly, the calculation of the similarity between the first candidate trajectory and the first trajectory in Embodiment 3 is used as an example for description.

Similarly, before the similarity calculation is described, a corresponding calculation amount is defined.

It is assumed that the first hybrid code set of the first trajectory is represented by $C_A$. It can be learned from the extension process of the first trajectory described in Embodiment 4 that: The first hybrid code set includes hybrid codes that are of the trajectory points of the first trajectory and that are initially obtained by the server and the hybrid codes obtained by the server through extension based on the trajectory data that is of the trajectory points and that is initially obtained by the server. It is assumed that a set of the hybrid codes of the trajectory points that are of the first trajectory and that are initially obtained by the server is represented by $C_{A1}$, and a set of the hybrid codes obtained by the server through extension based on the trajectory data that is of the trajectory points and that is initially obtained by the server is represented by $C_{A2}$. In this case, $CA = C_{A1} + C_{A2}$.

In addition, it is assumed that the trajectory length of the read first candidate trajectory is $|C_B|$, where $C_B$ represents a code set of the first candidate trajectory. A quantity of the same hybrid codes in the hybrid codes of the first candidate trajectory and the hybrid codes that are of the trajectory points of the first trajectory and that are initially obtained by the server is $|C_{A1} \cap C_B|$, and a quantity of the same hybrid codes in the hybrid cods of the first candidate trajectory and the hybrid codes obtained by the server through extension based on the trajectory data that is of the trajectory points and that is initially obtained by the server is $|C_{A2} \cap C_B|$.

The following describes trajectory similarity calculation in several scenarios as an example.

The first scenario is a common application scenario that does not include features requiring special attention.

In this scenario, the similarity between the first candidate trajectory and the first trajectory may be calculated by using the following formula:

$$GSIM = \frac{|(C_{A1} \cap C_B) \cup (C_{A2} \cap C_B)|}{|C_{A1}| + K \times |C_B| - |(C_{A1} \cap C_B) \cup (C_{A2} \cap C_B)|}$$

In this formula, GSIM indicates the similarity, and K is greater than or equal to 1. Here, the coefficient K is added to consider a case in which similarity calculation is performed between trajectories corresponding to the hybrid codes at different levels. When K is equal to 1, it indicates that the hybrid code of the first trajectory and the hybrid code of the first candidate trajectory are hybrid codes at a same level in the index tree. When K is greater than 1, it indicates that the level of the hybrid code of the first candidate trajectory in the index tree is lower than the level of the hybrid code of the first trajectory in the index tree. This case is corresponding to the case described in S 1303 in which "the server may use, as candidate similar trajectories, trajectories corresponding to trajectory identifiers stored in the storage spaces of the lower-level nodes corresponding to codes that are the same as those in the first hybrid code set in the index tree".

Optionally, K may be $2^q$, where q is an integer greater than or equal to 0. q represents a difference between the level of the hybrid code of the first candidate trajectory in the index tree and the level of the hybrid code of the first trajectory in the index tree. K can be used to balance the impact of inconsistency between the quantity of spatial-temporal grids mapped to trajectories at different levels and an actual path length.

The second scenario is a scenario that focuses on features associated with trajectories, for example, a hitchhiking or crime tracking scenario.

In this scenario, the similarity between the first candidate trajectory and the first trajectory may be calculated by using the following formula:

$$\text{GSIM} = \frac{|(C_{A1} \cap C_B) \cup (C_{A2} \cap C_B)| \times 2}{|C_{A1}| + K \times |C_B|}$$

The calculation can improve accuracy of similarity calculation between the two trajectories in the second scenario.

The third scenario is a scenario that focuses on the similarity with a source trajectory, such as epidemic analysis and tracking.

In this scenario, the similarity between the first candidate trajectory and the first trajectory may be calculated by using the following formula:

$$\text{GSIM} = \frac{|(C_{A1} \cap C_B) \cup (C_{A2} \cap C_B)|}{|C_{A1}|}$$

Similarity calculation formulas in this embodiment of this application are not limited to the foregoing formulas. A specific calculation formula is determined based on an actual situation. This is not limited in this solution.

After calculating the similarity between each candidate similar trajectory and the first trajectory, the server may screen trajectory data of the foregoing N similar trajectories based on the similarity. For a specific implementation process, refer to the specific description of S 1305 in Embodiment 3. Details are not described herein again.

In conclusion, in this embodiment of this application, spatial-temporal grid division is first performed, and multi-scale spatial-temporal grid encoding expression is performed on a trajectory by using a spatial-temporal grid encoding manner, so that dimension-reduced collinearity of high-dimensional time-spatial information of the trajectory is implemented, thereby reducing difficulty in organization management and analysis, and reducing storage space occupation. Further, a multi-level multi-dimensional index database construction scheme is provided, so that the trajectory similarity query can be performed based on a plurality of dimensions such as time, space, and attribute. In addition, a multi-dimensional similarity measurement method is provided to implement the multi-dimensional trajectory similarity query, and an adaptive similarity algorithm is provided for different scenarios to improve the accuracy of trajectory similarity matching. Algorithms can be used for calculation based on different levels, thereby improving calculation efficiency and reducing algorithm complexity.

The foregoing mainly describes the data processing method provided in embodiments of this application. It may be understood that, to implement the foregoing functions, each device includes corresponding hardware structures and/or software modules for performing corresponding functions. A person skilled in the art should be easily aware that units and algorithm steps in the examples described with reference to the embodiments disclosed in this specification may be implemented in a form of hardware or in a form of a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the device may be divided into function modules based on the foregoing method examples. For example, each function module may be obtained through division based on each corresponding function, or two or more functions may be integrated into one module. The integrated module may be implemented in a form of hardware, or may be implemented in a form of a software functional module. It should be noted that, in embodiments of this application, division into the modules is an example and is merely logical function division, and may be other division in an actual implementation.

When each function module is obtained through division corresponding to each function, FIG. 16 is a schematic diagram of a possible logical structure of a device. The device may be the server in the foregoing embodiments, or may be a chip in the foregoing server, or may be a processing system in the foregoing server, or the like. The device 1600 includes a first obtaining unit 1601, a second obtaining unit 1602, a query unit 1603, and a third obtaining unit 1604.

The first obtaining unit 1601 is configured to obtain first information, where the first information includes spatial position data and temporal data of one or more trajectory points of a first trajectory.

The second obtaining unit 1602 is configured to obtain a first hybrid code set based on the first information, where the first hybrid code set includes a hybrid code of each trajectory point of the first information, and the hybrid code is obtained through encoding according to an encoding rule of a hybrid code of a preset level in an index database; the hybrid code includes a temporal code of a trajectory point and a spatial code of the trajectory point, the temporal code is obtained based on the temporal data, and the spatial code is obtained based on the spatial position data; the index database has a multi-level index structure and includes hybrid codes of a plurality of levels, hybrid codes of each level are divided into sets based on hybrid codes of a level to which the hybrid codes of each level belong, and there is an indexing relationship between the hybrid codes of each level and the hybrid codes of the level to which the hybrid codes of each level belong, the hybrid codes of the plurality of levels include hybrid codes with trajectory information, the trajectory information is used to indicate a trajectory identifier of a trajectory to which the hybrid code belongs and a trajectory length of the trajectory to which the hybrid code belongs, and a trajectory length of a trajectory is a quantity of hybrid codes whose trajectory identifiers stored in the index database indicate the same trajectory.

The query unit 1603 is configured to search the index database based on each hybrid code in the first hybrid code set according to a query device of a multi-level index structure, to obtain a second hybrid code set, where the hybrid code in the second hybrid code set is a hybrid code with trajectory information; and the hybrid code in the second hybrid code set is mapped to trajectory information of m candidate similar trajectories, where m is an integer.

The third obtaining unit 1604 is configured to obtain N similar trajectories based on a trajectory length of the first trajectory and the trajectory information of the m candidate similar trajectories, where N is an integer less than or equal to m.

In a possible implementation, the query unit 1603 is specifically configured to:
compare each hybrid code in the first hybrid code set with the hybrid codes in the index database according to the query method of a multi-level index structure, to obtain the second hybrid code set, where the hybrid code in the second hybrid code set is a hybrid code that is in the index database and that is the same as a hybrid code in the first hybrid code set, and/or a lower-level hybrid code and/or a higher-level hybrid code that are/is corresponding to a hybrid code that is in the index database and that is the same as a hybrid code in the first hybrid code set.

In a possible implementation, the first information further includes attribute data of the first trajectory, the trajectory information further includes attribute information of a trajectory indicated by the trajectory information, and the attribute information is obtained based on the attribute data of the trajectory indicated by the trajectory information; and the query unit 1603 is specifically configured to:

compare each hybrid code in the first hybrid code set with the hybrid codes in the index database according to the query device of a multi-level index structure, to obtain a first matching hybrid code, where the first matching hybrid code is a hybrid code that is in the index database and that is the same as a hybrid code in the first hybrid code set, and/or a lower-level hybrid code and/or a higher-level hybrid code that are/is corresponding to a hybrid code that is in the index database and that is the same as a hybrid code in the first hybrid code set; and
obtain the second hybrid code set based on the first matching hybrid code, where the hybrid code in the second hybrid code set is a hybrid code that is in the first matching hybrid codes and whose attribute information includes the attribute information of the first trajectory.

In a possible implementation, the query unit 1603 is specifically configured to:

determine a hybrid code of a target level based on the first hybrid code in the first hybrid code set, where the target level is a level to which the preset level belongs;
perform query based on the hybrid code at the target level, to obtain a first candidate hybrid code set; and
compare the first hybrid code with the first candidate hybrid code set.

In a possible implementation, the second obtaining unit 1602 is specifically configured to:

encode the spatial position data of the one or more trajectory points according to an encoding rule of a spatial code in the hybrid code of the preset level, to obtain a spatial code of each of the one or more trajectory points;
encode the temporal data of the one or more trajectory points according to an encoding rule of a temporal code in the hybrid code of the preset level, to obtain a spatial code of each of the one or more trajectory points; and
combine the spatial code and the temporal code of each of the one or more trajectory points to obtain the hybrid code of each trajectory point.

In a possible implementation, the first information further includes attribute data of the first trajectory, and the second obtaining unit 1602 is specifically configured to:

encode the spatial position data of the one or more trajectory points according to an encoding rule of a spatial code in the hybrid code of the preset level, to obtain a spatial code of each of the one or more trajectory points;
encode the temporal data of the one or more trajectory points according to an encoding rule of a temporal code in the hybrid code of the preset level, to obtain a spatial code of each of the one or more trajectory points; and
encode the attribute data of the first trajectory to obtain an attribute code of the first trajectory; and
combine the spatial code and the temporal code of each of the one or more trajectory points and the attribute code to obtain the hybrid code of each trajectory point.

In a possible implementation, the third obtaining unit 1604 is specifically configured to:

calculate a quantity of the ith codes, where the quantity of the ith codes is calculated based on a quantity of hybrid codes to which an ith identifier is mapped in the second hybrid code set, the ith identifier is a trajectory identifier of an ith candidate similar trajectory, and a value of i ranges from 1 to m;
obtain an ith length, where the ith length is obtained through calculation based on the trajectory length of the first trajectory, or based on a trajectory length of the ith candidate similar trajectory and the trajectory length of the first trajectory;
calculate a ratio of the quantity of the ith codes to the ith length, where the ratio is a similarity between the ith candidate similar trajectory and the first trajectory; and
screen the N similar trajectories based on the m similarities obtained through calculation.

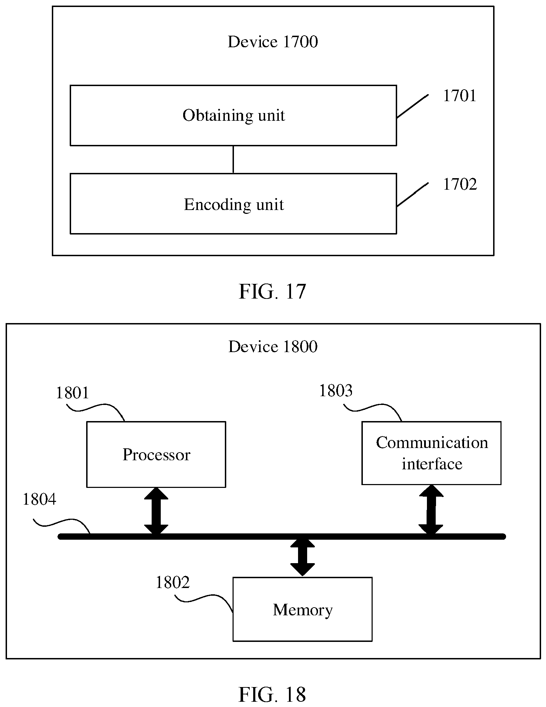

In a possible implementation, the first hybrid code set further includes hybrid codes of trajectory interpolation points, and the trajectory interpolation points are obtained based on the one or more trajectory points according to a preset interpolation device.
In a possible implementation, the first hybrid code set further includes hybrid codes of extended trajectory points, and the extended trajectory points are obtained by a preset extension device based on the one or more trajectory points and the trajectory interpolation point.
In a possible implementation, the index database is a database constructed based on a spatial-temporal grid model, the spatial-temporal grid model includes a plurality of levels of spatial-temporal grids, each spatial-temporal grid level is determined based on a spatial level and a temporal division granularity that are set, and each spatial-temporal grid is mapped to a hybrid code; and the plurality of levels of the index database are r levels, r is greater than 1, and the r levels of the index database are corresponding to r spatial-temporal grid levels.
In a possible implementation, the index database is mapped to a trajectory database, and the trajectory database is used to store raw data of a plurality of trajectories included in the index database; and the raw data includes a plurality of pieces of data in temporal data, spatial position data, and attribute data of the plurality of trajectories.
For specific operations and beneficial effects of the units in the device 1600 shown in FIG. 16, refer to the description of the method in FIG. 13 and the possible implementations thereof. Details are not described herein again.
When each function module is obtained through division corresponding to each function, FIG. 17 is a schematic diagram of a possible logical structure of a device. The device may be the server in the foregoing embodiments, or may be a chip in the foregoing server, or may be a processing system in the foregoing server, or the like. The device 1700 includes an obtaining unit 1701 and an encoding unit 1702.
The obtaining unit 1701 is configured to obtain trajectory data of a second trajectory, where the trajectory data includes spatial position data and temporal data of one or more trajectory points of the second trajectory.
The encoding unit 1702 is configured to perform encoding, based on the trajectory data code, to obtain a third hybrid code set expressing the second trajectory, where the third hybrid code set includes a hybrid code of each trajectory point of the second trajectory, and the hybrid code is obtained through encoding according to an encoding rule of a hybrid code of a preset level in an index database; and the foregoing hybrid code includes temporal code of the trajectory point and spatial code of the trajectory point, the foregoing temporal code is obtained based on the foregoing temporal data, and the foregoing spatial code is obtained based on the foregoing spatial position data; and the index database includes r-level hybrid codes, r is greater than 1, the r-level hybrid codes are hybrid codes mapped to spatial-temporal grids in r spatial-temporal grid levels, and the r levels are one-to-one mapped to the r spatial-temporal grid levels. The r spatial-temporal grid levels are r levels in a plurality of levels included in the preset spatial-temporal grid model, and each spatial-temporal grid level in the foregoing spatial-temporal grid model is determined according to a spatial level and a temporal division granularity that are set.
In a possible implementation, the encoding unit 1702 is specifically configured to:

encode the spatial position data of the one or more trajectory points according to an encoding rule of a spatial code in the hybrid code of the preset level, to obtain a spatial code of each of the one or more trajectory points;
encode the temporal data of the one or more trajectory points according to an encoding rule of a temporal code in the hybrid code of the preset level, to obtain a spatial code of each of the one or more trajectory points; and combine the spatial code and the temporal code of each of the one or more trajectory points to obtain the hybrid code of each trajectory point, where the hybrid codes of the one or more trajectory points form the third hybrid code set.

In a possible implementation, the trajectory data further includes attribute data of the second trajectory, and the encoding unit 1702 is specifically configured to:

encode the spatial position data of the one or more trajectory points according to an encoding rule of a spatial code in the hybrid code of the preset level, to obtain a spatial code of each of the one or more trajectory points; encode the temporal data of the one or more trajectory points according to an encoding rule of a temporal code in the hybrid code of the preset level, to obtain a spatial code of each of the one or more trajectory points; and encode the attribute data of the second trajectory to obtain an attribute code of the second trajectory; and combine the spatial code and the temporal code of each of the one or more trajectory points and the attribute code to obtain a hybrid code of each trajectory point, where the hybrid codes of the one or more trajectory points form the third hybrid code set.

In a possible implementation, the third hybrid code set further includes hybrid codes of trajectory interpolation points, and the hybrid codes of the trajectory interpolation points are hybrid codes of trajectory points calculated based on the hybrid code of each of the one or more trajectory points according to the preset interpolation device.

For specific operations and beneficial effects of the units in the device 1700 shown in FIG. 17, refer to the description of the method in FIG. 10 and the possible implementations thereof. Details are not described herein again.

FIG. 18 is a schematic diagram of a possible hardware structure of a device according to this application. The device may be the server in the methods in the foregoing embodiments. The device 1800 specifically includes a processor 1801, a memory 1802, and a communication interface 1803. The processor 1801, the communication interface 1803, and the memory 1802 may be connected to each other or connected to each other by using a bus 1804.

For example, the memory 1802 is configured to store a computer program and data of the device 1800. The memory 1802 may include but is not limited to a random access memory (random access memory, RAM), a read-only memory (read-only memory, ROM), an erasable programmable read-only memory (erasable programmable read-only memory, EPROM), a portable read-only memory (compact disc read-only memory, CD-ROM), or the like. When the embodiment shown in FIG. 16 is implemented, and the units described in the embodiment in FIG. 16 are implemented by using software, software or program code required for performing functions of the units in FIG. 16 is stored in the memory 1802.

The communication interface 1803 is configured to support the device 1800 in performing communication, for example, receiving or sending data or a signal.

The processor 1801 may be a central processing unit, a general-purpose processor, a digital signal processor, an application-specific integrated circuit, a field programmable gate array or another programmable logic device, a transistor logic device, a hardware component, or any combination thereof. Alternatively, the processor may be a combination of processors implementing a computing function, for example, a combination of one or more microprocessors, or a combination of a digital signal processor and a microprocessor. The processor 1801 may be configured to read the program stored in the memory 1802, and perform operations performed by the server in the method in FIG. 13 and the methods in the possible implementations.

For specific operations and beneficial effects of the device 1800 shown in FIG. 18, refer to descriptions in the foregoing method embodiments and the possible implementations of the method embodiments. Details are not described herein again.

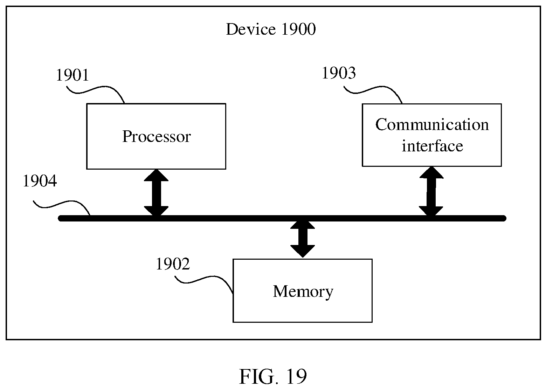

FIG. 19 is a schematic diagram of a possible hardware structure of a device according to this application. The device may be the server in the methods in the foregoing embodiments. The device 1900 specifically includes a processor 1901, a memory 1902, and a communication interface 1903. The processor 1901, the communication interface 1903, and the memory 1902 may be connected to each other or connected to each other by using a bus 1904.

For example, the memory 1902 is configured to store a computer program and data of the device 1900. The memory 1902 may include but is not limited to a random access memory (random access memory, RAM), a read-only memory (read-only memory, ROM), an erasable programmable read-only memory (erasable programmable read-only memory, EPROM), a portable read-only memory (compact disc read-only memory, CD-ROM), or the like. When the embodiment shown in FIG. 17 is implemented, and the units described in the embodiment in FIG. 17 are implemented by using software, software or program code required for performing functions of the units in FIG. 17 may be stored in the memory 1902.

The communication interface 1903 is configured to support the device 1900 in performing communication, for example, receiving or sending data or a signal.

The processor 1901 may be a central processing unit, a general-purpose processor, a digital signal processor, an application-specific integrated circuit, a field programmable gate array or another programmable logic device, a transistor logic device, a hardware component, or any combination thereof. Alternatively, the processor may be a combination of processors implementing a computing function, for example, a combination of one or more microprocessors, or a combination of a digital signal processor and a microprocessor. The processor 1901 may be configured to read the program stored in the memory 1902, and perform operations performed by the device in the method in FIG. 10 and the methods in the possible implementations.

For specific operations and beneficial effects of the device 1900 shown in FIG. 19, refer to descriptions in the foregoing method embodiments and the possible implementations of the method embodiments. Details are not described herein again.

An embodiment of this application further provides an apparatus. The apparatus includes a processor, a communication interface, and a memory. The apparatus is configured to perform the methods in FIG. 13 and the possible embodiments thereof.

In a possible implementation, the apparatus is a chip or a system on a chip (System on a Chip, SoC).

An embodiment of this application further provides an apparatus. The apparatus includes a processor and a communication interface. The apparatus is configured to perform the methods in FIG. 10 and the possible embodiments thereof.

In a possible implementation, the apparatus is a chip or a system on a chip SoC.

An embodiment of this application further provides a computer readable storage medium. The computer readable storage medium stores a computer program, and the computer program is executed by a processor to implement the methods in FIG. 13 and the possible embodiments thereof.

An embodiment of this application further provides a computer readable storage medium. The computer readable storage medium stores a computer program, and the computer program is executed by a processor to implement the methods in FIG. 10 and the possible embodiments thereof.

An embodiment of this application further provides a computer program product. When the computer program product is read and executed by a computer, the methods in FIG. 13 and the possible embodiments thereof will be executed.

An embodiment of this application further provides a computer program product. When the computer program product is read and executed by a computer, the methods in FIG. 10 and the possible embodiments thereof will be executed.

An embodiment of this application further provides a computer program. When the computer program is executed on a computer, the computer is enabled to implement the methods in FIG. 13 and the possible embodiments thereof.

An embodiment of this application further provides a computer program. When the computer program is executed on a computer, the computer is enabled to implement the methods in FIG. 10 and the possible embodiments thereof.

In conclusion, in this application, a hybrid code is obtained by encoding with reference to temporal information and spatial information of a trajectory point of a trajectory, a multi-level index database is constructed based on the hybrid code, and the trajectory information is mapped to the hybrid code of the index database. On this basis, similar trajectories of the target trajectories are queried in the index database, so that accuracy of trajectory query can be improved, complexity of trajectory similarity calculation can be reduced, and efficiency in querying a similar trajectory can be improved.

In this application, the terms "first", "second", and the like are used to distinguish between same or similar items whose effects and functions are basically the same. It should be understood that there is no logical or time-sequence dependency between "first", "second", and "nth", and a quantity and an execution sequence are not limited. It should also be understood that although terms such as "first" and "second" are used in the following description to describe various elements, these elements should not be limited by the terms. These terms are merely used to distinguish one element from another element. For example, without departing from the scope of the described examples, a first trajectory may be referred to as a second trajectory, and similarly, a second trajectory may be referred to as a first trajectory. Both the first trajectory and the second trajectory may be the same trajectory, and in some cases may be separate and different trajectories.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

It should be further understood that the term "include" (also referred to as "includes", "including", "comprises", and/or "comprising") used in this specification specifies presence of the stated features, integers, steps, operations, elements, and/or components, with presence or addition of one or more other features, integers, steps, operations, elements, components, and/or their components not excluded.

It should further be understood that "one embodiment", "an embodiment", or "a possible implementation" mentioned in this specification means that particular features, structures, or characteristics related to the embodiments or implementations are included in at least one embodiment of this application. Therefore, "in one embodiment", "in an embodiment", or "in a possible implementation" appearing in this specification does not necessarily mean a same embodiment. In addition, these specified features, structures, or characteristics may be combined in one or more embodiments in any appropriate manner.

Finally, it should be noted that the foregoing embodiments are merely intended for describing the technical solutions of this application other than limiting this application. Although this application is described in detail with reference to the foregoing embodiments, a person of ordinary skill in the art should understand that they may still make modifications to the technical solutions described in the foregoing embodiments or make equivalent replacements to some or all technical features thereof, without departing from the scope of the technical solutions of embodiments of this application.

**Claims**

1. A data processing method, comprising:

    obtaining first information, wherein the first information comprises spatial position data and temporal data of one or more trajectory points of a first trajectory;
    obtaining a first hybrid code set based on the first information, wherein the first hybrid code set comprises a hybrid code of each trajectory point of the first information, and the hybrid code is obtained through encoding according to an encoding rule of a hybrid code of a preset level in an index database; the hybrid code comprises a temporal code of a trajectory point and a spatial code of the trajectory point, the temporal code is obtained based on the temporal data, and the spatial code is obtained based on the spatial position data; and the index database has a multi-level index structure and comprises hybrid codes of a plurality of levels, hybrid codes of each level are divided into sets based on hybrid codes of a level to which the hybrid codes of each level belong, there is an indexing relationship between the hybrid codes of each level and the hybrid codes of the level to which the hybrid codes of each level belong, the hybrid codes of the plurality of levels comprise hybrid codes with trajectory information, the trajectory information is used to indicate a trajectory identifier of a trajectory to which the hybrid code belongs and a trajectory length of the trajectory to which the hybrid code belongs, and a trajectory length of a trajectory is a quantity of hybrid codes whose trajectory identifiers stored in the index database indicate a same trajectory;
    querying the index database based on each hybrid code in the first hybrid code set according to a query method of a multi-level index structure, to obtain a second hybrid code set, wherein a hybrid code in the second hybrid code set is a hybrid code with trajectory information; and the hybrid code in the second hybrid code set is mapped to trajectory information of m candidate similar trajectories, wherein m is an integer; and
    obtaining N similar trajectories based on a trajectory length of the first trajectory and the trajectory information of the m candidate similar trajectories, wherein N is an integer less than or equal to m.

2. The method according to claim 1, wherein the querying the index database based on each hybrid code in the first hybrid code set according to a query method of a multi-level index structure, to obtain a second hybrid code set comprises:
    comparing each hybrid code in the first hybrid code set with a hybrid code in the index database according to the query method of the multi-level index structure, to obtain the second hybrid code set, wherein the hybrid code in the second hybrid code set is a hybrid code that is in the index database and that is the same as a hybrid code in the first hybrid code set, and/or a lower-level hybrid code and/or a higher-level hybrid code that correspond/corresponds to a hybrid code that is in the index database and that is the same as a hybrid code in the first hybrid code set.

3. The method according to claim 1, wherein the first information further comprises attribute data of the first trajectory, the trajectory information further comprises attribute information of a trajectory indicated by the trajectory information, and the attribute information is obtained based on attribute data of the trajectory indicated by the trajectory information; and
    the querying the index database based on each hybrid code in the first hybrid code set according to a query method of a multi-level index structure, to obtain a second hybrid code set comprises:

    comparing each hybrid code in the first hybrid code set with a hybrid code in the index database according to the query method of the multi-level index structure, to obtain a first matching hybrid code, wherein the first matching hybrid code is a hybrid code that is in the index database and that is the same as a hybrid code in the first hybrid code set, and/or a lower-level hybrid code and/or a higher-level hybrid code that correspond/corresponds to a hybrid code that is in the index database and that is the same as a hybrid code in the first hybrid code set; and

obtaining the second hybrid code set based on the first matching hybrid code, wherein the hybrid code in the second hybrid code set is a hybrid code that is in the first matching hybrid codes and whose attribute information comprises the attribute information of the first trajectory.

4. The method according to claim 2 or 3, wherein the comparing each hybrid code in the first hybrid code set with a hybrid code in the index database according to the query method of the multi-level index structure comprises:

determining a hybrid code of a target level based on a first hybrid code in the first hybrid code set, wherein the target level is a level to which the preset level belongs;

performing query based on the hybrid code of the target level, to obtain a first candidate hybrid code set; and

comparing the first hybrid code with the first candidate hybrid code set.

5. The method according to any one of claims 1 to 4, wherein the obtaining a first hybrid code set based on the first information comprises:

encoding the spatial position data of the one or more trajectory points according to an encoding rule of a spatial code in the hybrid code of the preset level, to obtain a spatial code of each of the one or more trajectory points;

encoding the temporal data of the one or more trajectory points according to an encoding rule of a temporal code in the hybrid code of the preset level, to obtain a temporal code of each of the one or more trajectory points; and

combining the spatial code and the temporal code of each of the one or more trajectory points to obtain the hybrid code of each trajectory point.

6. The method according to claim 1 or 2, wherein the first information further comprises attribute data of the first trajectory, and the obtaining a first hybrid code set based on the first information comprises:

encoding the spatial position data of the one or more trajectory points according to an encoding rule of a spatial code in the hybrid code of the preset level, to obtain a spatial code of each of the one or more trajectory points;

encoding the temporal data of the one or more trajectory points according to an encoding rule of a temporal code in the hybrid code of the preset level, to obtain a temporal code of each of the one or more trajectory points;

encoding the attribute data of the first trajectory to obtain an attribute code of the first trajectory; and

combining the spatial code and the temporal code of each of the one or more trajectory points and the attribute code to obtain the hybrid code of each trajectory point.

7. The method according to any one of claims 1 to 6, wherein the obtaining N similar trajectories based on a trajectory length of the first trajectory and the trajectory information of the m candidate similar trajectories comprises:

calculating a quantity of ith codes, wherein the quantity of the ith codes is calculated based on a quantity of hybrid codes to which an ith identifier is mapped in the second hybrid code set, the ith identifier is a trajectory identifier of an ith candidate similar trajectory, and a value of i ranges from 1 to m;

obtaining an ith length, wherein the ith length is obtained through calculation based on the trajectory length of the first trajectory, or based on a trajectory length of the ith candidate similar trajectory and the trajectory length of the first trajectory;

calculating a ratio of the quantity of the ith codes to the ith length, wherein the ratio is a similarity between the ith candidate similar trajectory and the first trajectory; and

screening the N similar trajectories based on m similarities obtained through the calculation.

8. The method according to any one of claims 1 to 7, wherein the first hybrid code set further comprises hybrid codes of trajectory interpolation points, and the trajectory interpolation points are obtained based on the one or more trajectory points according to a preset interpolation method.

9. The method according to claim 8, wherein the first hybrid code set further comprises hybrid codes of extended trajectory points, and the extended trajectory points are obtained based on the one or more trajectory points and the trajectory interpolation points by using a preset extension method.

10. The method according to any one of claims 1 to 9, wherein the index database is a database constructed based on a spatial-temporal grid model, the spatial-temporal grid model comprises a plurality of levels of spatial-temporal grids, each spatial-temporal grid level is determined based on a set spatial level and temporal division granularity, and each spatial-temporal grid is mapped to a hybrid code; and the plurality of levels of the index database are r levels, r is greater than 1, and the r levels of the index database respectively correspond to r spatial-temporal grid levels.

11. The method according to any one of claims 1 to 10, wherein the index database is mapped to a trajectory database, and the trajectory database is used to store raw data of a plurality of trajectories comprised in the index database; and the raw data comprises a plurality of pieces of data in temporal data, spatial position data, and attribute data of the plurality of trajectories.

12. A data processing device, comprising:

a first obtaining unit, configured to obtain first information, wherein the first information comprises spatial position data and temporal data of one or more trajectory points of a first trajectory;
a second obtaining unit, configured to obtain a first hybrid code set based on the first information, wherein the first hybrid code set comprises a hybrid code of each trajectory point of the first information, and the hybrid code is obtained through encoding according to an encoding rule of a hybrid code of a preset level in an index database; the hybrid code comprises a temporal code of a trajectory point and a spatial code of the trajectory point, the temporal code is obtained based on the temporal data, and the spatial code is obtained based on the spatial position data; and the index database has a multi-level index structure and comprises hybrid codes of a plurality of levels, hybrid codes of each level are divided into sets based on hybrid codes of a level to which the hybrid codes of each level belong, there is an indexing relationship between the hybrid codes of each level and the hybrid codes of the level to which the hybrid codes of each level belong, the hybrid codes of the plurality of levels comprise hybrid codes with trajectory information, the trajectory information is used to indicate a trajectory identifier of a trajectory to which the hybrid code belongs and a trajectory length of the trajectory to which the hybrid code belongs, and a trajectory length of a trajectory is a quantity of hybrid codes whose trajectory identifiers stored in the index database indicate a same trajectory;
a query unit, configured to query the index database based on each hybrid code in the first hybrid code set according to a query device of a multi-level index structure, to obtain a second hybrid code set, wherein a hybrid code in the second hybrid code set is a hybrid code with trajectory information; and the hybrid code in the second hybrid code set is mapped to trajectory information of m candidate similar trajectories, wherein m is an integer; and
a third obtaining unit, configured to obtain N similar trajectories based on a trajectory length of the first trajectory and the trajectory information of the m candidate similar trajectories, wherein N is an integer less than or equal to m.

13. The device according to claim 12, wherein the query unit is specifically configured to:
compare each hybrid code in the first hybrid code set with a hybrid code in the index database according to the query device of the multi-level index structure, to obtain the second hybrid code set, wherein the hybrid code in the second hybrid code set is a hybrid code that is in the index database and that is the same as a hybrid code in the first hybrid code set, and/or a lower-level hybrid code and/or a higher-level hybrid code that correspond/corresponds to a hybrid code that is in the index database and that is the same as a hybrid code in the first hybrid code set.

14. The device according to claim 12 or 13, wherein the first information further comprises attribute data of the first trajectory, the trajectory information further comprises attribute information of a trajectory indicated by the trajectory information, and the attribute information is obtained based on attribute data of the trajectory indicated by the trajectory information; and
the query unit is specifically configured to:

compare each hybrid code in the first hybrid code set with a hybrid code in the index database according to the query device of the multi-level index structure, to obtain a first matching hybrid code, wherein the first matching hybrid code is a hybrid code that is in the index database and that is the same as a hybrid code in the first hybrid code set, and/or a lower-level hybrid code and/or a higher-level hybrid code that correspond/corresponds to a hybrid code that is in the index database and that is the same as a hybrid code in the first hybrid code set; and obtain the second hybrid code set based on the first matching hybrid code, wherein the hybrid code in the second hybrid code set is a hybrid code that is in the first matching hybrid codes and whose attribute information comprises the attribute information of the first trajectory.

15. The device according to claim 13 or 14, wherein the query unit is specifically configured to:

determine a hybrid code of a target level based on a first hybrid code in the first hybrid code set, wherein the target level is a level to which the preset level belongs;

perform query based on the hybrid code of the target level, to obtain a first candidate hybrid code set; and

compare the first hybrid code with the first candidate hybrid code set.

16. The device according to any one of claims 12 to 15, wherein the second obtaining unit is specifically configured to:

encode the spatial position data of the one or more trajectory points according to an encoding rule of a spatial code in the hybrid code of the preset level, to obtain a spatial code of each of the one or more trajectory points;

encode the temporal data of the one or more trajectory points according to an encoding rule of a temporal code in the hybrid code of the preset level, to obtain a temporal code of each of the one or more trajectory points; and

combine the spatial code and the temporal code of each of the one or more trajectory points to obtain the hybrid code of each trajectory point.

17. The device according to claim 12 or 13, wherein the first information further comprises attribute data of the first trajectory, and the second obtaining unit is specifically configured to:

encode the spatial position data of the one or more trajectory points according to an encoding rule of a spatial code in the hybrid code of the preset level, to obtain a spatial code of each of the one or more trajectory points;

encode the temporal data of the one or more trajectory points according to an encoding rule of a temporal code in the hybrid code of the preset level, to obtain a temporal code of each of the one or more trajectory points;

encode the attribute data of the first trajectory to obtain an attribute code of the first trajectory; and

combine the spatial code and the temporal code of each of the one or more trajectory points and the attribute code to obtain the hybrid code of each trajectory point.

18. The device according to any one of claims 12 to 17, wherein the third obtaining unit is specifically configured to:

calculate a quantity of ith codes, wherein the quantity of the ith codes is calculated based on a quantity of hybrid codes to which an ith identifier is mapped in the second hybrid code set, the ith identifier is a trajectory identifier of an ith candidate similar trajectory, and a value of i ranges from 1 to m;

obtain an ith length, wherein the ith length is obtained through calculation based on the trajectory length of the first trajectory, or based on a trajectory length of the ith candidate similar trajectory and the trajectory length of the first trajectory;

calculate a ratio of the quantity of the ith codes to the ith length, wherein the ratio is a similarity between the ith candidate similar trajectory and the first trajectory; and

screen the N similar trajectories based on m similarities obtained through the calculation.

19. The device according to any one of claims 12 to 18, wherein the first hybrid code set further comprises a hybrid code of trajectory interpolation points, and the trajectory interpolation points are obtained based on the one or more trajectory points according to a preset interpolation device.

20. The device according to claim 19, wherein the first hybrid code set further comprises hybrid codes of extended trajectory points, and the extended trajectory points are obtained based on the one or more trajectory points and the trajectory interpolation points by using a preset extension device.

21. The device according to any one of claims 12 to 20, wherein the index database is a database constructed based on a spatial-temporal grid model, the spatial-temporal grid model comprises a plurality of levels of spatial-temporal grids, and each spatial-temporal grid level is determined based on a set spatial level and temporal division granularity, and each spatial-temporal grid is mapped to a hybrid code; and the plurality of levels of the index database are r levels, r is greater than 1, and the r levels of the index database respectively correspond to r spatial-temporal grid levels.

22. The device according to any one of claims 12 to 21, wherein the index database is mapped to a trajectory database, and the trajectory database is used to store raw data of a plurality of trajectories comprised in the index database; and the raw data comprises a plurality of pieces of data in temporal data, spatial position data, and attribute data of the plurality of trajectories.

23. A data processing device, comprising a processor, a communication interface, and a memory, wherein the memory is configured to store program instructions and/or data, and the processor is configured to execute the program instructions stored in the memory, to enable the device to perform the method according to any one of claims 1 to 11.

24. A computer-readable storage medium, wherein the computer-readable storage medium stores a computer program, and the computer program is executed by a processor to implement the method according to any one of claims 1 to 11.

25. A computer program product, wherein when the computer program product is read and executed by a computer, the method according to any one of claims 1 to 11 is performed.

26. An apparatus, wherein the apparatus comprises a processor, a communication interface, and a memory, and the apparatus is configured to perform the method according to any one of claims 1 to 11.

27. The apparatus according to claim 26, wherein the apparatus is a chip or a system on chip SoC.

FIG. 1

FIG. 2

FIG. 3

FIG. 4

FIG. 5

FIG. 6

FIG. 7

FIG. 8

FIG. 9

S1001: A server obtains trajectory data of a trajectory

S1002: The server encodes the obtained trajectory data to obtain a code of a corresponding trajectory

S1003: When the trajectory includes a plurality of trajectory points, the server constructs an encoding model of the trajectory by using an interpolation method

S1004: The server constructs an index database based on obtained spatial-temporal hybrid codes of the trajectory

S1005: The server constructs a trajectory database based on the trajectory data obtained in S1001

FIG. 10

FIG. 11A

FIG. 11B

FIG. 12

S1301: A server obtains first information, where the first information includes spatial position data and temporal data of one or more trajectory points of a first trajectory

S1302: The server obtains a first hybrid code set based on the first information, where the first hybrid code set is used to query a trajectory similar to the first trajectory in an index database

S1303: The server searches, based on the first hybrid code set, the index database for trajectory information of m candidate similar trajectories similar to the first trajectory, where m is an integer

S1304: The server calculates a similarity between the first trajectory and the m candidate similar trajectories based on a trajectory length of the first trajectory and the trajectory information of the m candidate similar trajectories

S1305: The server screens trajectory data of N similar trajectories, where N is an integer greater than or equal to m

FIG. 13

FIG. 14

FIG. 15

FIG. 16

Device 1700

Obtaining unit      1701

Encoding unit      1702

FIG. 17

Device 1800

1801

Processor

1803

Communication interface

1804

1802

Memory

FIG. 18

Device 1900

1901

1903

Processor

Communication
interface

1904

1902

Memory

FIG. 19

# EP 4 206 611 A1

## INTERNATIONAL SEARCH REPORT

| | International application No. |
|---|---|
| | **PCT/CN2021/120792** |

**A. CLASSIFICATION OF SUBJECT MATTER**

G01C 21/32(2006.01)i

According to International Patent Classification (IPC) or to both national classification and IPC

**B. FIELDS SEARCHED**

Minimum documentation searched (classification system followed by classification symbols)

G01C; G06F

Documentation searched other than minimum documentation to the extent that such documents are included in the fields searched

Electronic data base consulted during the international search (name of data base and, where practicable, search terms used)

CNKI, CNPAT, WPI, EPODOC, IEEE: 运动, 行动, 移动, 轨迹, 相似, 一致, 时间, 时态, 空间, 时空, 编码, time, space, locat +, place, position, spatio w temporal, cod+, track, movement, simil+

**C. DOCUMENTS CONSIDERED TO BE RELEVANT**

| Category* | Citation of document, with indication, where appropriate, of the relevant passages | Relevant to claim No. |
|---|---|---|
| X | CN 111141294 A (XI'AN JIAOTONG UNIVERSITY) 12 May 2020 (2020-05-12) description, paragraphs 0039-0121, figures 1-12 | 1-9, 11-20, 22-27 |
| A | CN 111475596 A (NATIONAL UNIVERSITY OF DEFENSE TECHNOLOGY OF PLA.) 31 July 2020 (2020-07-31) entire document | 1-27 |
| A | CN 111724586 A (TSINGHUA UNIVERSITY) 29 September 2020 (2020-09-29) entire document | 1-27 |
| A | CN 111159107 A (BEIJING MININGLAMP SOFTWARE SYSTEM CO., LTD.) 15 May 2020 (2020-05-15) entire document | 1-27 |
| A | CN 109165215 A (SUZHOU SHIRUI INFORMATION TECHNOLOGY CO., LTD.) 08 January 2019 (2019-01-08) entire document | 1-27 |
| A | WO 2017156443 A1 (RUTGERS, THE STATE UNIVERSITY OF NEW JERSEY) 14 September 2017 (2017-09-14) entire document | 1-27 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **17 December 2021** | **31 December 2021** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2021/120792**

| Patent document cited in search report | | | Publication date (day/month/year) | Patent family member(s) | Publication date (day/month/year) |
|---|---|---|---|---|---|
| CN | 111141294 | A | 12 May 2020 | None | |
| CN | 111475596 | A | 31 July 2020 | None | |
| CN | 111724586 | A | 29 September 2020 | None | |
| CN | 111159107 | A | 15 May 2020 | None | |
| CN | 109165215 | A | 08 January 2019 | None | |
| WO | 2017156443 | A1 | 14 September 2017 | None | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202011066444